# EUROPEAN PATENT APPLICATION

(11) **EP 4 800 866 A1**
(43) Date of publication of application: **02.09.2026**
(21) Application number: 25160580.4
(22) Date of filing: 27.02.2025
(51) Int. Cl.: H02J 3/01, H02J 3/18, H02M 7/797

(54) **A POWER CONVERTER DEVICE WITH AN INTEGRATED CONTROL SCHEME**

(71) Applicant: Aros Electronics AB, 431 53 Mölndal (SE)
(72) Inventor: NYMAN, Gabriel, 534 94 Vara (SE); NILSSON, Markus, 431 45 Mölndal (SE)
(74) Representative: Lind Edlund Kenamets Intellectual Property AB

(57) **Abstract**

The present disclosure relates to systems and methods for controlling and compensating reactive power consumption in an electricity distribution network by means of one or more power converter devices. Each power converter device may be configured to provide active power to a respective power consumer such as a mechanical load. The systems and methods herein further pertain to mitigating voltage harmonic components in the electricity distribution network by means of the one or more power converter devices. A distributed control system comprising a plurality of power converter devices for counteracting reactive power consumption and/or harmonic mitigation in the electricity distribution network has also been disclosed.

## Description

### FIELD OF THE INVENTION

The present invention generally relates to methods and systems for controlling active and reactive power consumption in an electricity distribution network and more specifically to power converter devices supplying electrical power to industrial machinery arranged in an industrial facility while controlling reactive power consumption and harmonic distortions in the electricity distribution network.

### BACKGROUND OF THE INVENTION

One of the main challenges for electricity distribution networks, for instance those of industrial facilities, is controlling power quality delivered to industrial machinery and different types of power consuming loads present in the facility. Additionally, recent developments in distributed production of electricity originating from different sources necessitate implementation of local power quality control schemes.

Two main factors to consider when controlling the power quality are presence of reactive power consumption and harmonic distortions in the electricity distribution network or the power grid. Reactive power is usually the result of inductive loads, for instance electric motors, connected to the electricity distribution network, causing a lagging phase difference between the current and the voltage signals. Reactive power increases network losses as well as total power usage without performing useful mechanical work.

Furthermore, the presence of harmonic voltage distortions on the power grid is also a common issue negatively affecting the power quality. Harmonics are periodic waveform components with frequencies that are multiples of the fundamental frequency of the main signal. Voltage harmonics are usually the result of the presence of non-linear loads and switching electronics and can cause additional losses, heating issues, blown capacitor bank fuses, to name a few.

Most commonly, utility providers regulate the amount of reactive power that could be consumed and apply excess fees to mitigate the issues associated with over-consumption of reactive power. Some of the existing solutions for mitigating reactive power is installing STATCOMs, active power filters or switched capacitor banks in the electricity distribution network.

Similarly, active harmonic filters may be installed for mitigating the harmonic components in electricity distribution networks. Installation of additional equipment such as STATCOMs and active power filters in the grid not only leads to higher maintenance and component costs but also creates negative environmental impacts.

In light of the above, there is a need in the field of controlling power quality in the electricity distribution networks for more efficient and cost-effective solutions to mitigate reactive power consumption and removal of harmonic distortions.

### SUMMARY OF THE INVENTION

It is an object of the present invention to provide methods and systems for solving or at least alleviating some of the above-mentioned drawbacks and problems with the solutions of prior art for reactive power and harmonic distortion control in electricity distribution networks.

These and other objects may be achieved by a power converter device, methods of providing reactive power and harmonic compensation and a distributed system of power converter devices providing reactive power and harmonic compensation as defined in the appended independent and dependent claims herein.

The term exemplary is in the following to be interpreted as serving as an example, example implementation, instance, or illustration.

According to a first aspect of the present invention, there is provided a power converter device configured to be connected, and provide electric power to a power consumer device comprised in an electricity distribution network. The power converter device may comprise a control unit, that may be referred to as a controller module of the power converter device. The power converter device may additionally or alternatively be in communication with an external control unit. The control unit is configured to estimate, based on data representative of one or more real-time characteristics of the electricity distribution network, a reactive current indicator parameter associated with a total reactive power consumption by one or more electricity consumer devices external to the power consumer device and connected to the electricity distribution network. The control unit is further configured to calculate a corresponding reactive power compensation current based on the determined reactive current indicator parameter to counteract the reactive power consumption in the electricity distribution network. The power converter device is further configured to receive a first control signal from the control unit causing the power converter to generate a corresponding reactive power compensation signal. The reactive power compensation signal is generated based on the calculated reactive power compensation current without compromising delivery of electric power to the power consumer device. In several embodiments, data associated with one or more real-time characteristics of the electricity distribution network may comprise sensor measurement data and/or simulation data. The control unit may be further configured to obtain the data indicative of the one or more real-time characteristics of the electricity distribution network. The data indicative of the one or more real-time characteristics of the electricity distribution network may comprise a real-time AC current flowing in the electricity distribution network. The data may further comprise a real-time AC input voltage of the power converter device. The control unit may be further configured to estimate the reactive current indicator parameter by calculating a voltage-to-current phase shift derived based on the obtained data. Further, the control unit may be configured to determine an initial reactive power compensation current based on a deviation between the determined reactive current indicator parameter and a predetermined setpoint for reactive current of the electricity distribution network. The control unit may be further configured to determine a calibrated portion of the initial reactive power compensation current adjusted based at least on a respective amount of active power consumption of the power consuming device. The power converter device may be further configured to generate the reactive power compensation signal based on the calibrated portion; and provide the generated reactive power compensation signal to the electricity distribution network.

The use of separate power electronic converters to actively control reactive power consumption has been previously attempted. However, equipment such as active power filters are proprietary products, that are separately installed and serve no other purpose than improving the power quality in the electricity distribution network. As mentioned earlier, these standalone solutions have considerable drawbacks.

The present invention is based on the realization that power converters which are already installed in connection to power consumer devices, e.g., one or more mechanical loads and industrial machinery such as robotic equipment to provide them with active power, can be advantageously employed to mitigate issues with reactive power consumption. The reactive power-related issues may be caused by external loads such as inductive loads, electric motors, transformers, or any other mechanical loads connected to the electricity distribution network. Accordingly, a dynamic reactive power compensation control scheme for correcting deviations in the power factor is integrated into the existing power converter devices.

The amount of reactive power consumed in the electricity distribution network may be determined based on information pertaining to a real-time AC current of the electricity distribution network and its relationship with a real-time AC voltage in the electricity distribution network. A reactive current indicator parameter of the real-time AC current can be estimated based on an estimated voltage-to-current phase angle between the above two parameters.

Accordingly, by extracting the reactive current indicator parameter of the electricity distribution network and generating a counteracting signal by the power converter device to be provided to the electricity network, the power factor of the facility can be advantageously corrected. More notably, the reactive power control schemes presented herein are seamlessly integrated with the primary operation of the power converters for providing the required power supply to their respective mechanical loads.

This way transportation, installation, maintenance and component usage drawbacks associated with independent compensatory equipment are alleviated. Moreover, overall costs associated with local control and maintenance of power quality and power factor are considerably reduced.

The present invention is further based on the insight that the power converter's main operation, i.e., delivering active power to its respective mechanical load, will not be impeded by introducing the control scheme for mitigating the reactive power consumption by the external inductive loads.

Furthermore, the integrated control schemes presented herein enable each power converter device to provide reactive power compensation signals to counteract the negative impact of external inductive loads on the power factor without the need for prior knowledge about specific characteristics of each external load such as load impedances, phase differences, or individual contribution of each inductive load to the total reactive power consumption and the like.

The presented power converter device herein comprises controllable power electronic components. More specifically, the power converter device may comprise a three-phase bidirectional AC (alternating current)-DC (direct current) controlled rectifier device. The power converter device may further comprise a network filter as an interface between the electric power grid and the three phase rectifier. The filter may be any suitable filter such as an inductive-capacitive filter to be arranged as the grid-connected current input to reduce grid current harmonics and thus protect the mechanical load against transients from the electricity grid network. In some embodiments, the network filter may be an inductor-capacitor-inductor (LCL) filter.

The power converter device may further comprise a DC bus that in turn may be equipped with an internal capacitor unit or connected to other components such as a DC-DC converter. The three phase rectifier unit is controlled to maintain the voltage level at the DC bus capacitor at a preset value or a preset range.

In several embodiments, the controlled rectifier includes active components such as transistors arranged in a control bridge layout. Any suitable layout or topology of the rectifier to be implemented in the power converter device is conceivable and is *per se* known in the art. In several embodiments, the bridge layout may be a full-bridge layout. The three-phase full bridge converts the three-phase AC currents in the LCL filter to a DC current on the DC bus. The DC bus is connectable to the mechanical load in order to provide electrical power to the mechanical load. The bridge is also enabled to convert currents in the opposite direction, i.e., the presented power converters devices allow a bidirectional flow of energy between the electricity distribution network and the mechanical load. The bridge may comprise MOSFET transistors. In some embodiments, the MOSFET transistors may be silicon carbide MOSFET transistors.

The transistors may be controlled by applying pulse width modulation (PWM) signals having designated duty cycles. Therefore, the transistor devices in the rectifier can be controlled by fast switching in order to create a voltage difference over the LCL filter compared to the electricity distribution network, thus generating a current that can be provided to the electricity distribution network.

As used herein, and for the sake of assisting the reader only, when referring to the electricity distribution network, it is meant to be the electrical power grid (local grid) of the industrial facility at which the mechanical loads and other inductive loads are arranged and connected to the local grid. When referring to electricity grid network, it is meant to be the large-scale power grid network such as regional or national electricity infrastructure for generating, transmitting and distributing electricity to electricity consumers such as the industrial facility herein. The electricity distribution network of the industrial facility may be in communication with or coupled to the electricity grid network by means of plurality of power lines.

It should also be appreciated that even though the invention is described for an industrial facility comprising the mechanical and inductive loads, the presented methods and systems are readily compatible with and applicable to provide the associated advantages in a plurality of facilities, or in microgrids.

In some embodiments, the control unit may be further configured to obtain a predetermined DC output voltage setpoint and sensor measurement and/or simulation data indicative of a real-time DC output voltage of the power converter device to be provided to the power consumer device. The control unit may be further configured to determine a reference current in phase with the AC input voltage of the power converter device based on an estimated phase angle of the real-time AC input voltage of the power converter device, and a calculated deviation between the predetermined DC output voltage setpoint and the real-time DC output voltage of the power converter device. The determined reference current may be indicative of the active electric power consumption by the power consumer device. The power converter device may further be configured to provide the determined reference current to the electricity distribution network in order to minimize the deviation between the DC output voltage of the power converter device and the predetermined DC output voltage setpoint.

This way it is ensured that any voltage drops across the DC link or DC bus connected to the power converter device may be effectively mitigated.

In some embodiments, the control unit may further be configured to determine a first threshold value for the initial reactive power compensation current. The first threshold value may be set to be lower than a predefined peak current capacity of the power converter device. The control unit may be further configured to determine a second threshold value for the initial reactive power compensation current corresponding to a difference between the predefined peak current capacity of the power converter device and the determined reference current in phase with the AC input voltage.

This way, the control scheme will ensure that the active power required by and delivered to the power consuming device is prioritized during the load cycle, and that it will not be compromised as a result of providing the reactive power compensation signal to the electricity distribution network.

In some exemplary embodiments the control unit may further be configured to determine the calibrated portion of the initial reactive power compensation current by calculating a minimum value between the initial reactive power compensation current and the first and the second threshold values.

In some example embodiments, the first control signal received from the control unit may be adapted to regulate an amount of the reactive power compensation signal to be generated by the power converter device based on data indicative of a real-time active power delivery status of the power converter device such that an operating temperature of the power converter device may be maintained within a predetermined temperature range.

This way, operating temperature fluctuation due to variations in active power requirements of the mechanical load will be advantageously minimized.

In some exemplary embodiments, the control unit may further be configured to estimate a voltage harmonic component of the real-time AC input voltage of the power converter device having a first and/or a second harmonic frequency, the voltage harmonic component, being produced by the one or more electricity consumer devices external to the power consumer device. The control unit may further be configured to determine an initial harmonic compensation current having a frequency corresponding to the first and/or the second harmonic frequencies of the estimated voltage harmonic component. The power converter device may further be configured to receive a second control signal from the control unit causing the power converter device to generate a harmonic compensation signal based on the determined initial harmonic compensation current. Further, the power converter device may be caused to provide the generated harmonic compensation signal to the electricity distribution network in order to compensate for the estimated voltage harmonic component.

It has been realized by the present inventors that the already installed power converter device not only is capable of providing reactive power control but also control schemes for mitigating undesirable voltage harmonics can be integrated in the control schemes of the power converter devices.

In some exemplary embodiments, the control unit may further be configured to continuously estimate the voltage harmonic component based on obtained data associated with the real-time AC input voltage. Further, the control unit may be configured to continuously adjust a phase and an amplitude component of the determined initial harmonic compensation current until an optimum phase shift and an amplitude factor for the generated harmonic compensation signal are identified. The optimum phase shift and amplitude factors may provide a corresponding counter-harmonic voltage induced at a total network impedance of the electricity distribution network that minimizes the estimated voltage harmonic component for each of the respective first and/or second harmonic frequencies.

In some embodiments, the control unit may further be configured to obtain a predicted value indicative of an internally generated voltage harmonic component having a certain amount and a certain harmonic frequency. The internally generated harmonic component that may also be referred to as self-harmonic, will be produced as a result of performing a certain task by the power consumer device connected to the power converter device. The control unit may further be configured to generate and provide a respective harmonic compensation signal to the electricity distribution network based on the predicted voltage harmonic component.

According to a second aspect of the present invention, there is provided a distributed control system comprising a plurality of power converter devices according to any one of embodiments of the first aspect. Each power converter device configured to be connected and provide electric power to a respective power consumer device. Each power converter device is configured to obtain a first control command signal. When the first control command signal indicates that the respective power converter device is selected, the power converter device is further configured to generate and provide a respective portion of the reactive power compensation signal to the electricity distribution network. The respective portion of the reactive power compensation signal to be generated by the respective power converter devices will be indicated by the first control command signal. The respective portion provided to the network will at least partly compensate for and control the total reactive power consumption in the electricity distribution network.

The present invention is further based on the insight that by incorporating a plurality of power converter devices in a cooperative network, wherein each power converter is equipped with the integrated control schemes presented herein, the maximum capacity of reactive power and harmonic compensation that is collectively generated and provided to the local grid can be significantly elevated. Furthermore, reactive power compensation can still be effectively regulated even when some of the power converter devices in the system operate at their peak active power delivery cycles and are unable to contribute to the reactive power and harmonic control schemes. What is more is that the total amount of reactive power compensation that must be provided to counteract a certain amount of determined reactive power or harmonics being present in the local grid, can be effectively divided amongst the power converter devices. The division may be based on the individual capacities and active power delivery conditions of each power converter device. Thus, each power converter device will be responsible for delivery of a respective portion of the reactive power and/or harmonic compensation signals to the local grid without being overloaded. This way, reliable and unhindered delivery of active power to each mechanical load is further ensured, while compensating for the network distortions with the seamlessly coordinated control scheme of the distributed control system.

In some exemplary embodiments, the first control command signal may be adapted to assign an amount of the respective portion of the reactive power compensation signal to be generated by each selected power converter device based on data indicative of an average active power consumption of the power consumer device connected to that power converter device measured over a predefined period of time. This way a long term average active power delivery requirement of the power converter devices is considered for assigning their respective portions of the reactive power compensation signals.

In yet another exemplary embodiment, the first control command signal may be adapted to assign an amount of the respective portion of the reactive power compensation signal to be generated by each selected power converter device based on data indicative of a real-time active power delivery status of that power converter device such that an operating temperature of the power converter device may be maintained within a predetermined temperature range. This way real-time operational temperature of each power converter device is taken into account to assign its reactive power compensation portion. This way the operational temperature fluctuations of the power converter devices are minimized, further contributing to prolonging the lifetime of the power converter devices, e.g., the lifetime of their electronic components.

In some exemplary embodiments, each power converter device may be configured to obtain a second control command signal, and when selected upon receiving the second control command signal, the power converter device may generate and provide a respective portion of the harmonic compensation signal to the network. The respective portion of the harmonic compensation signal may be indicated by the second control command signal. This way the estimated voltage harmonic component will at least partly be compensated.

In some exemplary embodiments, the respective portion of the harmonic compensation signal of each selected power converter device may be assigned an amount and a corresponding first and/or second harmonic frequency to counteract an identified specific voltage harmonic sub-component based on data indicative of a physical proximity of the selected power converter device to an external load which is producing that identified voltage harmonic sub-component in the electricity distribution network.

In some exemplary embodiments, each power converter device may further be configured to obtain a predicted value indicative of an internally generated voltage harmonic component, having a certain amount and a certain harmonic frequency, which will be produced as a result of performing a certain task by the power consumer device connected to that power converter device. The power converter device may be further configured to generate and provide a respective harmonic compensation signal to the electricity distribution network based on the predicted voltage harmonic component.

According to a third aspect of the present invention, there is provided a computer-implemented method for controlling reactive power consumption in an electricity distribution network. The method may at least partly be implemented in a power converter device configured to be connected, and to provide electric power to a power consumer device comprised in the electricity distribution network. The power converter device may comprise or may be in communication with a control unit. The method comprises determining based on data representative of one or more real-time characteristics of the electricity distribution network, a reactive current indicator parameter associated with a total reactive power consumption by one or more electricity consumer devices external to the power consumer device and connected to the electricity distribution network. The method further comprises calculating a corresponding reactive power compensation current based on the determined reactive current indicator parameter to counteract the reactive power consumption in the electricity distribution network. Further, the method comprises receiving a first control signal from the control unit at the power converter device. Upon receiving the first control signal, the method further comprises generating a corresponding reactive power compensation signal based on the calculated reactive power compensation current without compromising delivery of electric power to the power consumer device.

In some embodiments, data associated with one or more real-time characteristics of the electricity distribution network may comprise sensor measurement data and/or simulation data. The method may further comprise obtaining data indicative of the one or more real-time characteristics of the electricity distribution network, wherein the data may comprise a real-time AC current flowing in the electricity distribution network and a real-time AC input voltage of the power converter device. The method may further comprise determining the reactive current indicator parameter by calculating a voltage-to-current phase angle shift derived based on the obtained data. Further the method may comprise determining an initial reactive power compensation current by calculating a deviation between the determined reactive current indicator parameter and a predetermined setpoint for reactive current of the electricity distribution network. The method may further comprise determining a calibrated portion of the initial reactive power compensation current adjusted based at least on a respective amount of active power consumption of the power consuming device. The method may further comprise generating the reactive power compensation signal based on the calibrated portion and providing the generated reactive power compensation signal to the electricity distribution network.

In some embodiments, the method may further comprise obtaining a predetermined DC output voltage setpoint and sensor measurement and/or simulation data indicative of a real-time DC output voltage of the power converter device to be provided to the power consumer device. Further, the method may further comprise determining a reference current in phase with the AC input voltage of the power converter device based on an estimated phase angle of the real-time AC input voltage of the power converter device and a calculated deviation between the predetermined DC output voltage setpoint and the real-time DC output voltage of the power converter device. The determined reference current may be indicative of the active electric power consumption by the power consumer device. The method may further comprise providing the determined reference current to the electricity distribution network in order to minimize the deviation between the DC output voltage of the power converter device and the predetermined DC output voltage setpoint.

In some embodiments, the method may further comprise determining a first threshold value for the initial reactive power compensation current. The first threshold value may be set to be lower than a predefined peak current capacity of the power converter device. The method may further comprise determining a second threshold value for the initial reactive power compensation current corresponding to a difference between the predefined peak current capacity of the power converter device and the determined reference current in phase with the AC input voltage.

In some embodiments, the method may further comprise determining the calibrated portion of the initial reactive power compensation current by calculating the minimum value between the initial reactive power compensation current and the first and the second threshold values.

In some embodiments, the method may further comprise regulating, by the first control signal received from the control unit, an amount of the reactive power compensation signal to be generated by the power converter device based on data indicative of a real-time active power delivery status of the power converter device such that an operating temperature of the power converter device may be maintained within a predetermined temperature range.

In some embodiments, the method may further comprise estimating a voltage harmonic component of the real-time AC input voltage of the power converter device having a first and/or a second harmonic frequency, the voltage harmonic component being produced by the one or more electricity consumer devices external to the power consumer device. The method may further comprise determining an initial harmonic compensation current having a frequency corresponding to the first and/or the second harmonic frequencies of the estimated voltage harmonic component. Further, the method may comprise receiving a second control signal from the control unit at the power converter. Upon receiving the second control signal, the method may further comprise generating a harmonic compensation signal based on the determined initial harmonic compensation current and providing the generated harmonic compensation signal to the electricity distribution network in order to compensate for the estimated voltage harmonic component.

In some embodiments, the method may further comprise continuously estimating the voltage harmonic component based on obtained data associated with the real-time AC input voltage. Further, the method may comprise continuously adjusting a phase and an amplitude component of the determined initial harmonic compensation current until an optimum phase shift and an amplitude factor for the generated harmonic compensation signal are identified. The method may further comprise minimizing the estimated voltage harmonic component for each of the respective first and/or second harmonic frequencies by applying the optimum phase shift and amplitude factors to induce a corresponding counter-harmonic voltage at a total network impedance of the electricity distribution network.

In some embodiments, the method may further comprise obtaining, for the power converter device, a predicted value indicative of an internally generated voltage harmonic component having a certain amount and a certain harmonic frequency, which will be produced as a result of performing a certain task by the power consumer device connected to the power converter device. The method may further comprise generating a respective harmonic compensation signal for the power converter device based on its predicted voltage harmonic component and providing the generated respective harmonic compensation signal to the electricity distribution network.

According to a fourth aspect of the present invention, there is provided a computer-implemented method for controlling reactive power consumption in an electricity distribution network, wherein the method may be implemented by a distributed control system comprising a plurality of power converter devices according to any one of embodiments of the first aspect. Each power converter device is configured to be connected, and to provide electric power to a respective power consumer device. The method comprises obtaining, at each power converter device, a first control command signal. When selected upon receiving the first control command signal, the method may further comprise generating a respective portion of the reactive power compensation signal indicated by the first control command signal. Further, the method may comprise providing the generated respective portion to the electricity distribution network in order to at least partly compensate for and control the total reactive power consumption in the electricity distribution network.

In some embodiments, the method may further comprise determining an amount of the respective portion of the reactive power compensation signal to be generated by each selected power converter device based on obtained data indicative of an average active power consumption of the power consumer device connected to that power converter device measured over a predefined period of time. Further, the method may comprise assigning, as indicated by the first control command signal, the amount of the respective portion of the reactive power compensation signal to each power converter device.

In some embodiments, the method may further comprise determining an amount of the respective portion of the reactive power compensation signal to be generated by each selected power converter device based on obtained data indicative of a real-time active power delivery status of that power converter device, such that an operating temperature of each selected power converter device may be maintained within a predetermined temperature range. Further, the method may comprise assigning, as indicated by the first control command signal, the amount of the respective portion of the reactive power compensation signal to each power converter device.

In some embodiments, the method may further comprise obtaining, at each power converter device, a second control command signal; and when selected upon receiving the second control command signal, the method may further comprise generating a respective portion of the harmonic compensation signal indicated by the second control command signal. Further, the method may comprise providing the generated respective portion to the electricity distribution network in order to at least partly compensate for the estimated voltage harmonic component.

In some embodiments, the method may further comprise identifying a specific voltage harmonic sub-component produced by an external load in the electricity distribution network. Further, the method may comprise assigning an amount and a corresponding first and/or second harmonic frequency to the respective portion of the harmonic compensation signal of each selected power converter device to counteract the identified voltage harmonic sub-component based on sensor data indicative of a physical proximity of that selected power converter device to that external load.

In some embodiments, the method may further comprise obtaining, for each power converter device, a predicted value indicative of an internally generated voltage harmonic component having a certain amount and a certain harmonic frequency, which will be produced as a result of performing a certain task by the power consumer device connected to that power converter device. The method may further comprise generating a respective harmonic compensation signal for each power converter device based on its predicted voltage harmonic component. Further, the method may comprise providing the generated respective harmonic compensation signal to the electricity distribution network.

According to a fifth aspect of the present invention, there is provided a computer program product comprising instructions which, when the program is executed by one or more processors of the controller module, control unit or the central controller causes the controller module, control unit or the central controller to carry out the methods according to any one of the embodiments of the methods disclosed in the third and fourth aspects herein. Accordingly, in a sixth aspect of the present invention there may be provided a computer-readable storage medium, such as a non-transitory computer-readable storage medium, storing one or more programs configured to be executed by one or more processors of the controller module, control unit or the central controller. The one or more programs may comprise instructions for performing the methods according to any one of the embodiments of the methods of the present invention.

It is to be noted that all the embodiments, elements, features and advantages associated with the first aspect also analogously apply to the second, third, fourth, fifths, and sixth aspects of the present disclosure.

These and other features and advantages of the present disclosure will in the following be further clarified in the following detailed description.

### BRIEF DESCRIPTION OF THE DRAWINGS

This and other aspects of the present invention will now be described in more detail, with reference to the appended drawings showing embodiments of the present invention. The drawings are only schematic and the relative dimensions of some structures and layers may be exaggerated and not drawn to scale. Rather the dimensions may be adapted for illustrational clarity and to facilitate understanding.
Fig. 1a shows a block diagram of interconnected grid networks and an example power consuming device comprised in an electricity distribution network and connected to a power converter device according to some embodiments of the present disclosure.
Fig. 1b shows a block diagram of a power converter of Fig. 1a, according to several embodiments of the present disclosure.
Figs. 1c - 1d show some of the components and circuits of the power converter device of Fig. 1b according to some embodiments of the present disclosure.
Fig. 2a shows a block diagram of an example control scheme for reactive power compensation integrated in the power converter device of Fig. 1b according to some embodiments of the present disclosure.
Figs 2b - 2c show schematic graphs depicting a voltage-to-current relationship in the electricity distribution network according to some embodiments of the present disclosure.
Figs. 3a - 3c show schematic block diagrams illustrating different aspects of a harmonic compensation control scheme according to some embodiments of the present disclosure.
Figs. 4a - 4b illustrate aspects of a distributed control system according to some embodiments of the present disclosure.
Figs. 5 and 6 show flowcharts of methods for counteracting reactive power consumption and mitigating harmonics in the electricity distribution network according to some embodiments of the present disclosure.

### DETAILED DESCRIPTION

The following disclosure presents various embodiments or examples for implementing different aspects of the provided subject matter. Specific examples of implementing the method are described to simplify the disclosure. These examples are not intended to be limiting. Additionally, reference numerals and/or letters may be repeated in various examples for simplicity and clarity, without implying a specific relationship between the different embodiments and/or configurations discussed, unless stated otherwise.

It is further to be noted that terms such as "first" and "second" etc. with reference to elements or steps may be used herein as labels to facilitate distinguishing between different elements and need not necessarily imply that such elements or steps are arranged or performed in that particular order, unless stated otherwise.

Those skilled in the art will appreciate that the steps, services and functions explained herein may be implemented using individual hardware circuitry, using software functioning in conjunction with one or more programmed microprocessors, microcontrollers, or general-purpose computers, using one or more Application Specific Integrated Circuits (ASICs) and/or using one or more Digital Signal Processors (DSPs) or some other programmable logical device, such as a Field Programmable Gate Array (FPGA). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

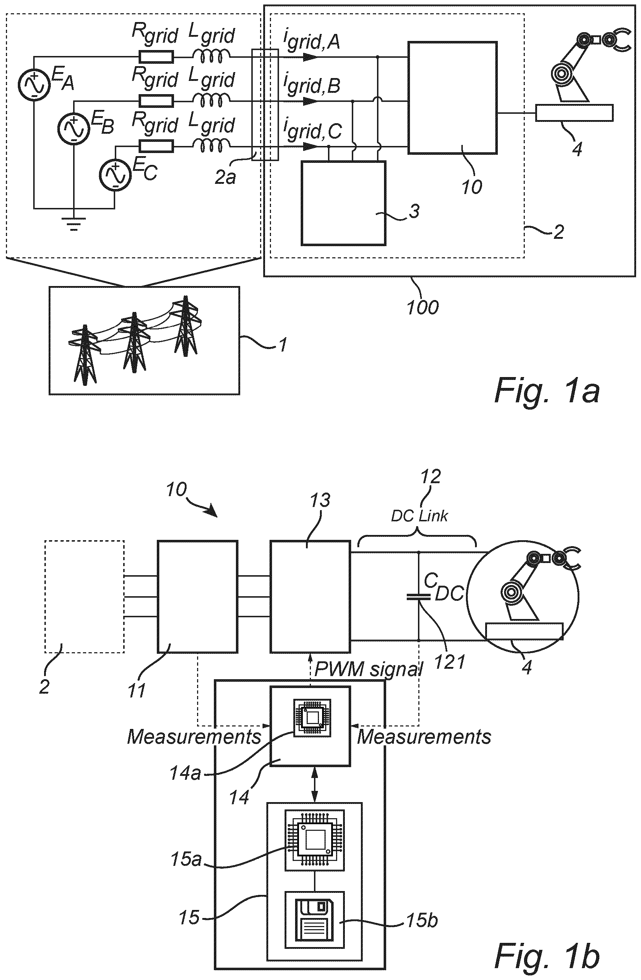

Fig. 1a illustrates a simplified and exemplary block diagram representation of an electric power grid 1, connected to an electricity distribution network 2, also referred to as the local grid 2 of an industrial facility 100. The electric power grid 1 may be any kind of large-scale electric grid providing electricity to power consumers such as the power consumer devices 4 arranged in the industrial facility 100 herein. The exemplary electric power grid 1, comprises a three-phase network with alternating voltage sources *E_{A}, E_{B},* and *E_{C}* for each individual phase, whereas the impedance of the three-phase network is depicted by *R_{grid}* and *L_{grid}* parameters. It should be clear that the above arrangement is simply an example illustration and the electric power grid 1 may have any suitable connection points or further components to perform its operations as presumed to be readily available to a person skilled in the art. The power grid 1 and the electricity distribution network 2 may be connected at a network intersection 2a. A total current that is drawn from the power grid 1 by the electricity distribution network 2 of the facility 100, will be denoted as *i_{grid}.* In this example, each phase A, B, C has its respective *i_{grid,A}, i_{grid,B}, and i_{grid,C}.*

The local grid 2, in the illustrated example is a power distribution network connected to one or more power consumer devices. Only one power consumer device 4 has been illustrated by way of example. The power consumer devices may be one or more mechanical loads and industrial machinery such as robotic equipment. The one or more power consumer devices 4 may simply be referred to as mechanical loads in the rest of this description.

The facility 100 may also comprise any other loads such as electric motors, transformers, or other mechanical loads connected to the electricity distribution network. In this example, a simplified block 3 is depicted to represent one or more loads external to the power consumer device 4. In the rest of the description, such loads may be referred to as one or more electricity consumer devices external to the power consumer device 4, or simply external loads.

The one or more power consumer devices 4 are connected to the electricity distribution network 2 through respective power converter devices 10. The power converter devices 10 are configured to be connected to the power consumer devices 4, in order to provide electric power to the power consumer devices 4 comprised in an electricity distribution network 2.

The power converter device 10 is configured to regulate, and control power delivery operations to the one or more mechanical loads 4. The power converter device 10 may perform operations such as connecting, disconnecting, increasing, or decreasing the amount of delivered power to its respective mechanical load 4 according to power delivery requirements. In an exemplary embodiment the power consuming device 4 may be a robotic arm, which the power converter device 10 provides its required DC current, by converting an AC current drawn from the electricity distribution network 2.

Fig. 1b schematically illustrates the exemplary power converter device 10 in greater detail. The power converter 10 comprises a filter 11 connected to the power distribution network 2, a DC link 12 (also referred to as DC bus) connected to the power consuming device 4, a controlled bridge 13 arranged in between and connecting the filter 11 and the DC link 12, and a controller module 14. The controller module 14 may comprise control logic 14a configured to carry out various computational and/or operational functions of the power converter device 10. The exemplary controller module 14 may comprise additional modules or units for performing corresponding tasks, for instance a reference generation module, a current controller module, a phase estimation module, a signal generation module, or the like. These modules may be hardware modules, or at least partly implemented in software. In some embodiments, these modules are entirely implemented by software functions.

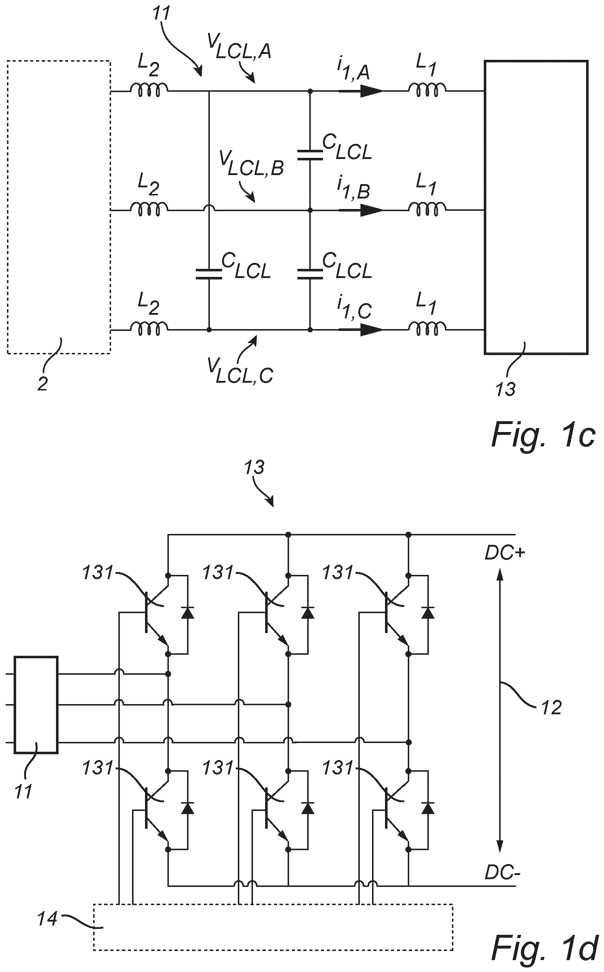

The network filter 11 acts as an interface between the electricity distribution network 2 and the controlled bridge 13. The filter 11 may be any suitable filter such as an inductive-capacitive filter to be arranged as the grid-connected current input to reduce grid current harmonics and thus protect the mechanical load 4 against transients from the electricity distribution network. In some embodiments, the network filter may be an inductor-capacitor-inductor (LCL) filter. In the illustrated example, in Fig. 1c, the filter is an example topology of an LCL-filter configured for operating against the three phase AC local grid 2 and interface the controlled bridge 13. The respective impedance parameters of the filter 11 may be a design choice, and may have any suitable parameters for the inductive, capacitive, and resistive components of the total filter impedance.

The bridge circuit 13 is conceivably any type of controlled bridge utilizing active switching for precise regulation of voltage, current and power directions. The bridge may comprise MOSFET transistors. In some embodiments, the MOSFET transistors may be silicon carbide MOSFET transistors.

The transistors may be controlled by applying pulse width modulation (PWM) signals having designated duty cycles. Therefore, the transistor devices in the rectifier can be controlled by fast switching in order to create a voltage difference over the LCL filter 11 compared to the electricity distribution network 2, thus generating a current that can be provided to the electricity distribution network.

The bridge 13 may for instance have a full-controlled topology, a semi-full bridge topology, an H-bridge topology, or a dual connected bridge topology as known in the art. In the illustrated example, the bridge circuit 13 is a full bridge AC rectifier which comprises a set of switchable transistors 131. In some embodiments, the transistors 131 may be configured to receive a PWM signal with customizable duty cycles adapted for controlling a switching operation of the transistors 131. By controlling the switching mechanism and switching frequencies of the controlled bridge 13, the voltage across the controlled bridge 13 and the current passing through the bridge 13 can be regulated. The controlled bridge 13 may be referred to as the AC rectifier 13, or full bridge circuit 13 or simply a bridge circuit 13 in the rest of this description. An important advantage of controlled rectifiers 13 compared to conventional diode rectifiers used in power converters is a bidirectional flow of energy, i.e., current across the rectifier circuit is enabled which in turn allows, both drawing and emitting the current from and to the local grid 2 when required. This attribute allows for providing a breaking energy of electrical machines such as the mechanical loads 4 back to the local grid 2 which may be used by other grid-connected devices.

As mentioned earlier, the present invention is based at least partly on the realization that power converters which are already installed in connection to mechanical loads 4 to provide them with active power, may be advantageously utilized to mitigate issues with reactive power consumption in the electricity distribution network caused by the external loads 3 such as the inductive loads 3 connected to the electricity distribution network 2. Accordingly, a dynamic reactive power compensation control scheme for correcting deviations in the power factor is integrated into the existing power converter devices 10.

It should be noted that in AC electric circuits, inductors and capacitors are energy-storing components. Energy flows into a capacitor when the voltage magnitude across the capacitor increases. Similarly, energy flows out of the capacitor when the voltage magnitude decreases. In an inductor, energy flow is instead governed by the current magnitude. When the current magnitude increases, energy increases within the inductor. The energy is then released once the current magnitude decreases. The average energy transferred over one cycle of the AC source is zero for ideal inductors and capacitors. However, the energy flowing between the source and the energy-storing components is at twice the frequency of the source. The peak instantaneous flow of energy between these components is referred to as the reactive power. Reactive power affects the total power draw of an electrical component from the local grid 2 but cannot perform useful mechanical work. Therefore, the presence of reactive power causes additional resistive losses in cables and components.

The reactive power generated by an example load may be mathematically expressed as *Q* = *V_{RMS}* × *I_{RMS}* sin *α* where *V_{RMS}* is the effective voltage across the load, *I_{RMS}* is the effective current through the load, and *α* is the angle between the voltage and current. When connected to the local grid 2, an inductor will absorb the reactive power generated by a capacitor. If the reactive power generated and absorbed is equal and cancelled, no reactive power will be present in the local grid 2 and the angle *α* will be zero. This scenario may be referred to as unity power factor, since the power factor cos(*α*) equals one. However, when the voltage and the current across the load are out or phase with respect to each other, the local grid 2 will experience presence of the reactive power, which will negatively affect the power factor.

In order for the example power converter 10 to counteract reactive power, control schemes are integrated in the operation of the power converter device 10. According to some embodiments herein, the controlled bridge circuit 13 will be utilized for administration of the control schemes integrated in the power converter device. In some embodiments, the control schemes may be implemented in and governed by the controller module 14 of the power converter device 10. Additionally or alternatively, the control schemes may be implemented remotely by a remote control unit 15, which is configured to be in communication with the power converter device 10. The control unit 15 may be a central or master control unit 15 overseeing the operation of a plurality of entities such as a plurality of power converter devices 10a - 10n ("n" being a natural number simply denoting any suitable number of power converter devices) serving a plurality of mechanical loads 4. The control unit 15 may be in communication with the controller module 14 of the power converter device 10, transmitting and/or retrieving information, log data, control command signals, sensor measurement data, data analysis log reports, and similar to and/or from the controller module 14. The control unit 15 and the power converter device 10 may be connected and in communication through any suitable communication technologies.

A communication network may be comprised in communication network infrastructure of the industrial facility 100 and be implemented through wired and/or wireless communication technologies such as wired local area network (LAN) or Ethernet, controller area network (CAN), or any wireless link such as wireless LAN, Wi-Fi, Bluetooth, etc. Details of such communication networks are presumed to be readily available to the skilled person in the art and will not be discussed here any further. In some embodiments, the control unit 15 may be comprised in the power converter device 10 or be the same as the controller module 14 of the power converter device 10. In the rest of the description, where an operation has been described to be carried out by the control unit 15, it should be clear that the operation may either be carried out by the control unit 15 comprised in the power converter device 10, e.g., the controller module 14, or by the remote control unit 15 external to the power converter device 10, or a combination thereof. The control unit 15 may also be referred to as processing device 15.

The control unit 15 or the processing device 15 are configured to carry out any one of the embodiments of the method 500 presented herein. The control unit 15 may comprise one or more processors 15a, such as CPUs or GPUs, or any other suitable microprocessors, microcontrollers, ASICs, FPGAs, one or more memory or data storage modules 15b and the like. The control unit 15 may comprise additional modules such as receiver modules (not specifically shown) for receiving input data including sensor measurement and/or simulation data, analysis modules (not specifically shown) configured to analyze and process the received input data and the like. The processors 15a or processing circuitry 15a in the processing device 15 may be configured to carry out several functions and operations of the presented technology herein.

The presented methods and systems herein will take advantage of the PWM-controlled switching operation of the bridge circuit 13 of the power converter device 10 in order to generate counteracting signals such as a reactive power compensation current signal. The generated signal will be provided to the electricity distribution network 2 by the bidirectional bridge circuit 13 and across the network filter 11.

In Fig. 1d, an exemplary bridge circuit 13 is illustrated in more detail. The illustrated bridge circuit 13 is a full-bridge bidirectional AC rectifier configured for converting three phase AC current received from the power grid 1 into DC current to supply a respective mechanical load 4. The example full bridge rectifier 13 comprises six controllable transistors 131, though it is conceivable that other circuit topologies may comprise a different number of transistors 131. Each transistor 131 is configured to obtain a PWM control signal from the controller module 14 and/or the control unit 15.

Returning to Fig. 1b, the DC link 12 arranged in between, and connecting the bridge circuit 13 and the mechanical load 4 comprises an example capacitor 121. The capacitor 121 may act as an energy buffer, ensuring continuous and stable provision of active power to the power consuming device 4 under various circumstances such as voltage drops over the power delivery network or at peak power consumption instances by the mechanical load 4.

A link voltage across the DC link 12 and its capacitor 121 is ideally kept within a predefined voltage range. In an exemplary and non-limiting embodiment, the predefined DC bus voltage range may be between 700 - 780 V for a mechanical load having a nominal operating voltage around 680 V. It should be clear to the reader that other operational voltage ranges and capacitor sizes are conceivable and may be customized based on the load power supply demands. The DC voltage across the capacitor 121 is ensured to be maintained at the operational range which is slightly above the operational voltage required for supporting unencumbered performance of the mechanical load 4.

In several embodiments, the power converter device 10, and more specifically the control unit 15 may be further configured to obtain a predetermined DC output voltage setpoint *V_{DC,ref},* e.g., the voltage range 700 - 780 V, and sensor measurements and/or simulation data indicative of a real-time DC output voltage *V_{DC}* of the power converter device 10 to be provided to the power consumer device 4, over the DC bus 12 or DC bus capacitor 121.

The control unit 15 may obtain the sensor data indicative of the real-time DC link voltage, e.g., measured by sensor devices at the link capacitor 121, as well as a real-time AC voltage across the network filter 11 as a real-time characteristic of the electricity distribution network 2 measured by sensor devices at the network filter 11. The AC voltage across the filter 11 is the AC input voltage provided by the electricity distribution network 2 to the power converter device 10. For simplicity, in the rest of the description, the input AC voltage will be referenced *V_{LCL}* for the example LCL filter 11 in Fig. 1c. Furthermore, the control unit 15 may obtain sensor data indicative of the AC current *i*₁ across the network filter 11. The current *i*₁ through the filter 11 corresponds to the AC current which flows in and out of the power converter device 10. The AC current drawn from the electricity network 2 will pass through the bridge circuit 13 that converts the AC current to the DC current for supplying the mechanical load.

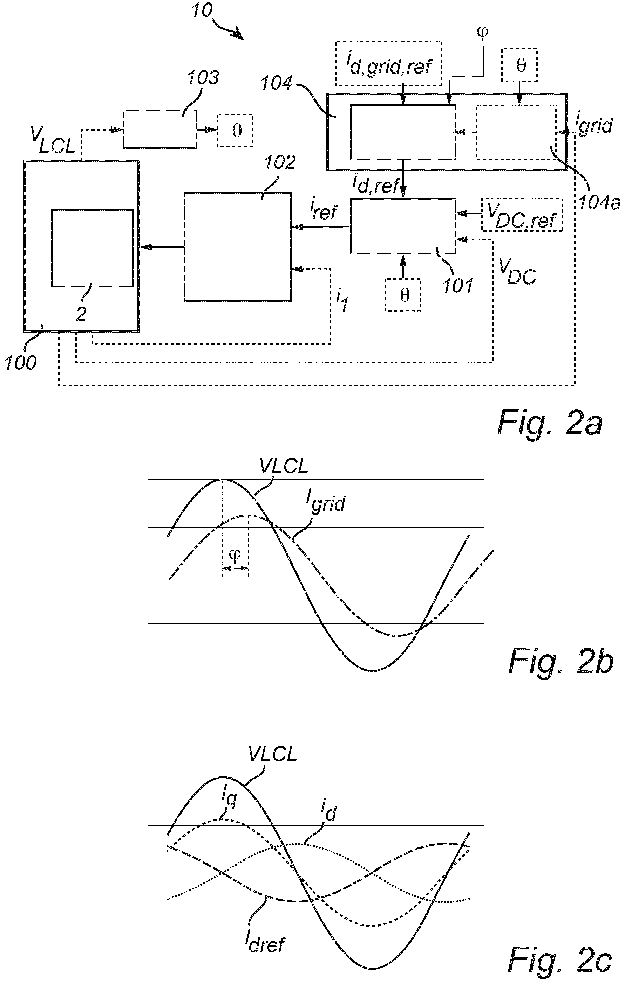

Moving on, the control unit 15 may be configured to determine a reference current *I_{ref}* in phase with the AC input voltage *V_{LCL}* of the power converter device 10 based on an estimated phase angle θ of the real-time AC input voltage *V_{LCL}* of the power converter device 10, and a calculated deviation between the predetermined DC output voltage setpoint *V_{DC,ref}* and the real-time DC output voltage *V_{DC}* of the power converter device 10. The determined reference current is indicative of the active electric power consumption by the mechanical load 4. It should be appreciated that other approaches than determining the reference current such as acquiring measurements or estimation data may be used in order to obtain the information pertaining to active electric power consumption by the mechanical load 4 and the active power delivery cycles of the power converter device 10. Moving on, when the reference current *I_{ref}* has been calculated, the power converter device 10 may be configured to provide the determined reference current to the electricity distribution network 2 in order to minimize the deviation between the DC output voltage of the power converter device 10 and the predetermined DC output voltage setpoint *V_{DC,ref}.* To this end, and to maintain the DC link voltage *V_{DC}* within the link voltage range, the control unit 15 iteratively compares the real-time, e.g., the DC link voltage *V_{DC}* with the predetermined DC link range and sends out corresponding PWM signals to the transistors 131 in the bridge circuit 13, to control the switching operation of the bridge circuit 13 such that the flow of internal current *i*₁ into the power converter device 10 is regulated. For instance, as shown in the exemplary schematic block diagram in Fig. 2a, the control unit 15 (or the controller module 14 for that matter) may comprise an example reference generator module 101 and an example current controller module 102 for calculating and generating the current reference *I_{ref}.* The resulting current reference *I_{ref}* is determined to maintain the predetermined DC-link voltage *V_{DC,ref}.* If the mechanical load 4 consumes more power than the power converter 10 draws from the electricity distribution network 2, a voltage drop across the DC link may occur, i.e., the real-time DC link voltage *V_{DC}* decreases, which results in an increase of the current reference *I_{ref},* and *vice versa.* The control unit 15 ensures that the current drawn and/or emitted by the power converter device 10 is in phase with the AC input voltage *V_{LCL}.* To this end, the control unit 15 may comprise a phase estimation module 103 configured to estimate the AC voltage *V_{LCL}* phase angle "θ", using the voltage measured in the LCL filter. In some embodiments, the phase estimation generator module 103 may be implemented by a phase-locked loop (PLL) configuration.

The angle may then be input to the current reference generation 101 to create a corresponding reference current *I_{ref},* in phase with the *V_{LCL}.* The reference generator module 101, current controller module 102, and the phase estimation module 103 may be partly or entirely implemented by corresponding software functions.

Reverting to the integrated control scheme for counteracting, controlling and compensating for the reactive power consumption by the inductive loads 3 in the electricity distribution or the local grid network 2, the power converter device is configured to obtain data associated with one or more real-time characteristics of the electricity distribution network 2. The obtained data may comprise sensor measurement data and/or simulation data. In several embodiments, the obtained data comprises the data associated with the real-time AC current flowing in the electricity distribution network 2. In several embodiments, as mentioned earlier the real-time data comprises the real-time AC input voltage *V_{LCL}* of the power converter device 10. As mentioned earlier, as defined herein, the real-time AC current is the total current that is drawn from the power grid 1 by the electricity distribution network 2 of the facility 100. In this example, each phase A, B, C has its respective *i_{grid,A}, i_{grid,B},* and *i_{grid,C}.* For simplicity, the discussions and examples are presented only for one of the phases of the three-phase network, however it should be clear to the skilled person that all the discussions, and advantages also analogously apply to the other phases of the three-phase network. For simplicity, the real-time AC current will be referenced *i_{grid}.*

The control unit 15 (or the controller module 114 for that matter) is configured to estimate a reactive current indicator parameter based on data representative of the one or more real-time characteristics of the electricity distribution network 2. The reactive current indicator parameter is associated with a total reactive power consumption by the one or more external loads 3 connected to the electricity distribution network 2. In several embodiments, the reactive current indicator parameter may be estimated by calculating a voltage-to-current phase shift "*φ*" derived based on the obtained data of the AC voltage *V_{LCL}* and the AC current *i_{grid}* parameters as shown in Fig. 2b. The phase shift or phase difference between the current and voltage parameters may be determined by the phase estimation generator module 103 of the control unit 15.

Furthermore, the control unit 15 may be configured to calculate a corresponding reactive power compensation current *i_{d,ref}* for counteracting a reactive current simply referenced *i_{d}* which flows in the electricity distribution network 2 and is proportional to the reactive power consumption by the external loads 3. As shown in the simplified illustrations in Figs. 2b and 2c, the control unit 15 is configured to determine the corresponding reactive power compensation current *i_{d,ref}* based on the determined reactive current indicator parameter in order to counteract the reactive power consumption in the electricity distribution network 2. More specifically, the control unit 15 may be configured to determine an initial reactive power compensation current *i_{d,ref}* based on a deviation between the determined reactive current indicator parameter and a predetermined setpoint, simply referenced i*_{d,grid,ref}*, for reactive current *i_{d}* of the electricity distribution network 2. By reactive current of the electricity distribution network 2 herein it is meant an AC current flowing in the network 2, which is out of phase (lagging behind) with the AC voltage *V_{LCL}* of the network 2. The determined reactive power compensation current will have a leading phase shift with respect to the AC voltage *V_{LCL}* of the network 2 in order to counteract the lagging phase of the reactive current.

In some embodiments, the determined voltage-to-current phase shift *φ* may be directly used as the reactive current indicator parameter. In some other embodiments, the reactive current indicator parameter may be a reactive current component calculated for the reactive current *i_{d}* of the electricity distribution network 2 based on the voltage-to-current phase shift *φ.* To this end, in some example implementations, the determined phase shift *φ* may be provided to a Direct-quadrature-zero (DQ0) transformation function 101a, denoted as DQ domain hereinafter. The DQ domain is a rotating reference frame, meaning that the D- and Q-axes rotate along with the electrical angle of a rotor of a synchronous machine. The result is a conversion from periodic A-B-C alternating signals into constants. The additional 0 component is equivalent to the zero sequence component in three-phase. The instantaneous active power *p*(*t*) and reactive power *q*(*t*) may be calculated with the D- and Q components of the DQ domain. The amount of reactive power may be determined by the amount of reactive current component, i.e., the D-current (*i_{d}*) drawn by the external loads 3. The D-current is calculated by using the determined voltage-to-current phase shift *φ* for the real-time AC current *i_{grid}.* The reactive current component represents the component of the grid current *i_{grid}* that is ninety degrees out of phase with the AC voltage *V_{LCL}* of the local grid 2. When the currents and voltages are out of phase by ninety degrees, the D-current (*i_{d}*) will be related to the current's root mean square (RMS) value by a factor of $\sqrt{3}$. If the currents and voltage are in phase, the in-phase Q-current (*i_{q}*) will have the same relation to the current's RMS value.

The in-phase Q-current component of the grid current is the component of the grid current that contributed to performing active work and delivery of active power to the mechanical loads 4.

Moving on, the control unit 15 may further be configured to determine a calibrated portion *i_{d,ref,C}* of the initial reactive power compensation current *i_{d,ref}* adjusted based at least on a respective amount of active power consumption of the mechanical load 4. In other words, the amount, i.e., the amplitude of determined counteracting current *i_{d,ref}* may be subject to limitations that correspond to the active power requirements of the mechanical loads 4. This feature will be explained further in the following with reference to the determined reference current *I_{ref}.*

In some embodiments, the control scheme may be implemented through an integral (I) current regulation control module. In some embodiments, the control unit 15 may be configured to determine the initial reactive power compensation current through a proportional-integral (PI) controller module 104. The integral controller (I) is a type of feedback controller where the control action is proportional to the integral of an error signal over time. The error signal in the integral (I) controller is to be understood as the difference between a desired setpoint and the actual process variable, e.g., a measured parameter. In some example embodiments, the (I) controller module 104 may be implemented as a part of the current controller module 102. The (I) controller module 104 may be partially or entirely implemented by a corresponding function in software and by the processing circuitry 15a of the control unit 15. The (I) controller 104 is configured to accumulate the error over time and adjust the control output to eliminate steady-state error. The desired setpoint or reference value of the (I) controller module 104 may be the *i_{d,grid,ref},* for reactive current *i_{d}* of the electricity distribution network 2. The observed or measured parameter of the (I) controller may be the reactive current indicator parameter, i.e., the voltage-to-current phase shift "φ" or the reactive current component, the D-current (*i_{d}*). The PI Controller combines the actions of both proportional (P) and integral (I) controllers. The proportional component provides a control action proportional to the determined error between the observed parameter and the reference value, while the integral component addresses the accumulated error over time. This combination enhances the system's stability and response time, reducing both steady-state error and oscillations. The PI controller is widely used in industrial control systems, and working principles of it *per se* are presumed to be known to the skilled person in the art.

Accordingly, when the control unit 15 has determined the calibrated reactive power compensation current *i_{d,ref},* the power converter device 10 may further be configured to receive a first control signal from the control unit 15 causing the power converter 10 to generate a corresponding reactive power compensation signal *i_{d,ref,S}* based on the calculated reactive power compensation current without compromising delivery of electric power to the power consumer device 4. In several embodiments, the power converter device 10 may be configured to generate the reactive power compensation signal *i_{d,ref,S}* based on the calibrated portion of the initial reactive power compensation current *i_{d,ref}.* Moreover, the power converter device 10 may be configured to provide the generated reactive power compensation signal to the electricity distribution network 2. The first control signal may be received by the controller module 14 of the power converter device 10 and applied to the control logic 14a in order to steer switching operation of the transistors 131 of the bridge circuit 13.

More specifically, control unit 15 determines a phase and an amplitude of the reactive power compensation current which would counteract the reactive current *i_{d}* of the local grid network 2. The determined reactive power compensation current *i_{d,ref}* would be anti-phase with the reactive current *i_{d}* of the local grid network 2. The control unit 15 may be configured to provide a PWM signal to the bridge circuit 13 of the power converter device 10 either via the controller module 14 or directly applied to the control logic 14a of the controller module 14 configured to steer switching operation of the transistors 131 in the bridge circuit 13. The PWM signal will steer the switching of the bridge circuit 13 such that a voltage difference over the LCL filter 11 compared to the electricity distribution network 2 is created. Accordingly, the power converter device 10 generates the reactive power compensation current signal *i_{d,ref,S}* that will be provided to the electricity distribution network 2 in order to counteract the reactive power consumption by the one or more external loads 3.

As mentioned earlier, the control unit 15 may further be configured to determine a calibrated portion of the initial reactive power compensation current *i_{d,ref}.* By the calibrated portion, it is meant that the amplitude of the initial reactive power compensation current *i_{d,ref}* will be adjusted based on one or more imposed constraints that are determined based on several factors, one of them being the active power consumption of the mechanical load 4 connected to the power converter device 10.

The calibrated or otherwise adjusted portion of the *i_{d,ref}* is determined to ensure that regular power delivery to the mechanical load 4 is maintained without any adverse impacts from the reactive power compensation control schemes. This is partly due to the fact that the power converter 10 has operational limitations regarding its current output and provided DC voltage. The power converter 10 has two main current limits that should be considered when performing power delivery and reactive power compensation and control. The first limit is a limit of the current draw per phase over time from the electricity distribution network 2. In some examples and types of the power converter device 10, this current limit may have an amplitude of 25 A RMS, though it will solely depend on the model and operational capacity of the power converters used. The second current limit is a limit of the instantaneous current through the power converter 10 to protect the internal components and electronics. The limit may be set to a maximum instantaneous current having an amplitude of 75 A RMS per phase for exemplary converter device 10. This current limit is also model-dependent and may be different for different converter devices. The DC voltage may also be constrained with respective suitable upper and lower limits. As mentioned before, the voltage should not reach under the nominal voltage of the mechanical load 4, for instance under the minimum operational voltage of 680 V for the one or more mechanical loads 4 in Figs. 1a and 1b. Any suitable upper limits for the DC voltage may be applied as required, e.g., an upper limit may be 800 V, which is the rated maximum voltage of the capacitor 121 of the DC link in the example of Fig. 1b.

When controlling the reactive power, the current limits of the power converter device 10 should accordingly be considered. In general, the control scheme may be provided with control constraints to ensure that when a set current limit of the power converter device 10 is reached, the provided reactive power compensation current *i_{d,ref}* is proportionally decreased in order to maintain the normal power supply to the mechanical loads 4. It should also be appreciated that by the reference current *I_{ref}* generation control scheme, any voltage drops across the DC link caused by the reactive current signal generation and provision, may be effectively mitigated by the current controller 102 as mentioned earlier.

Thus, in some embodiments, the control unit 15 may be further configured to calculate the first and second current limitations to be applied to the initial reactive power compensation current *i_{d,ref}.* More specifically, the control unit 15 may be configured to determine a first threshold value for the initial reactive power compensation current *i_{d,ref},* which has a value set to be lower than a predefined peak current capacity of the power converter device 10. As mentioned earlier, in a non-limiting example implementation the peak current capacity of the power converter device 10 may be 25 A RMS. Thus, the initial reactive power compensation current *i_{d,ref}* may be limited to an exemplary amplitude value of 20 A RMS. It should be clear that other appropriate threshold values are also conceivable. The maximum amount of possible reactive power compensation current to be provided by this power converter 10 may thus correspond to an example compensatory reactive power of about 14 kVAr calculated for the 20 A RMS first current threshold value. The control unit 15 may also be configured to determine a second threshold value for the initial reactive power compensation current *i_{d,ref}.* The second threshold value corresponds to a difference between the predefined peak current capacity of the power converter device 10 and the determined reference current *I_{ref}* in phase with the AC input voltage. While the first threshold value is set based on the operational limitations of the power converter device 10, the second threshold is specifically calculated to ensure that the power supply to the mechanical load 4 is not compromised e.g., during peak power usage. For the above example, the second threshold value (current amplitude) may be described as: $25 \sqrt{3} - {I}_{ref}$*.* In practice this means that the Q-current (*I_{ref}*) can reach up to $5 \sqrt{3}$ A without the initial reactive power compensation current *i_{d,ref}* being limited. However, when the *I_{ref}* exceeds $5 \sqrt{3}$ A, the second D-current limit is applied, leading to a linear decrease of *i_{d,ref}* as the Q-current increases.

In an example implementation and in order to prioritize the Q-current, the control unit 15 may determine the calibrated portion *i_{d,ref,C}* of the initial reactive power compensation current by calculating the minimum value between the initial reactive power compensation current and the first and the second threshold values, which may be expressed as: ${i}_{d , ref , c} = min \left({i}_{d , ref},20\sqrt{3},25\sqrt{3}-{I}_{ref}\right) .$

This way the calibrated portion of the initial reactive power compensation current *i_{d,ref}* is determined and provided to the power electronics, i.e., the bridge circuit 13 in order to generate the corresponding reactive power compensating current signal *i_{n,ref,S}.*

The above considerations may also mean that in some embodiments, no reactive power compensation current would be provided by the power converter 10 since the active power required by the power consuming device 4 should be prioritized during the load cycle and e.g., at the peak power draw by the mechanical load 4. However, when the load is idle, i.e., assuming no active power is consumed by the mechanical load 4, the maximum amount of reactive power compensating current only saturated by the first threshold value, e.g., the 20 A RMS first current threshold value, could be provided to the local grid 2. In other example scenarios falling in between the two mentioned extremes, the relationship between the current provided for the active power consumption at the mechanical load 4, and the reactive power compensation current may maintain a negative linear correlation. It should be appreciated that in some example implementations, the relationship between the current provided for the active power consumption at the mechanical load 4, and the reactive power compensation current may also show a non-linear correlation. It should also be appreciated that the active power cycle of the mechanical load 4 could have different shapes, maximum or minimum power values, or duty cycles which will depend on the type of the mechanical load 4 and the specific tasks to be performed by the load 4.

In some example embodiments, the power converter device 10 may be configured such that the first control signal received from the control unit 15 is adapted to regulate an amount of the reactive power compensation signal *i_{d,ref,S}* to be generated by the power converter device 10 based on data indicative of a real-time active power delivery status of the power converter device 10. More specifically, the control unit 15 (or the controller module 14 for that matter) may be configured to regulate the production of the reactive power compensation signal *i_{d,ref,S}* in relation to an operating temperature of the power converter device 10. In some embodiments sensor measurement data and/or temperature estimation of the operating temperature of the power converter device 10 may be used in order to regulate the production of reactive power compensation current signal *i_{d,ref,S}.* This way it will be ensured that the operating temperature of the power converter 10 and more specifically the operating temperature of the active components such as the transistors 131 of the bridge circuit 13 is maintained within a predetermined temperature range. Accordingly, the control unit 15 will regulate the generation of the reactive power compensation signal such that provisioning of both active power supply to the mechanical load 4, and the control scheme for reactive power compensation are synergistically controlled to produce an additional combined effect of maintaining an optimum operating temperature for the electronic components. This way, operating temperature fluctuation due to variations in active power requirements of the mechanical load 4, will be advantageously minimized. In some example implementations, the control unit 15 may be configured to impose the operational temperature requirements after the power converter device has exited an active power delivery cycle to the mechanical load 4. This way, instead of reverting to an idle status, the power converter device 10 will switch to reactive power generation mode, even if the local grid 2 reactive power consumption conditions did not necessitate such a transition. Here, the objective is to avoid operational temperature fluctuations of the power converter device 10 which will advantageously contribute to prolonging the lifetime of the electronic components of the power converter 10, and reducing maintenance and installation costs even further. In some example embodiments, the control unit may be configured to regulate the reactive power compensation signal to be generated based on sensor data indicative of a real-time active power delivery status of the power converter device 10 measured within a predefined time window after that power converter device 10 has exited a peak power delivery to the mechanical load 10. This is advantageous since the largest temperature fluctuations of the electronic components occur during the transitioning from the maximum active power delivery capacity to an idle state with no power delivery and then reverting another cycle of maximum power delivery. This way the idle cycles of the mechanical load 4 will be advantageously used for providing reactive power compensation. In the example scenarios above, the generated reactive power compensation will be absorbed by the local grid 2 to compensate for the reactive power consumption by the external loads 3 as previously described. Alternatively or additionally, the generated reactive power compensation may be provided to another power converter unit and its respective mechanical load 4, in order to counteract its contribution to the reactive power consumption in the network 2, further improving the power factor and power quality.

In some exemplary embodiments according to the present disclosure, the power converter device 10 may also be configured to provide yet another advantageous control function for mitigating voltage harmonics in the system, thus further stabilizing and improving the power quality in the electricity distribution network 2.

Typically, a desirable frequency of a power system is either 50 or 60 Hz. However, in practice, the voltage signals on the grid include a plurality of components that are different integer multiples of the fundamental frequency of the voltage waveform. These undesirable components, otherwise known as harmonic distortions, harmonic components or simply harmonics cause additional losses and disturbances in the power delivery systems. The harmonics are typically filtered out by means of installing additional equipment such as active harmonic filters.

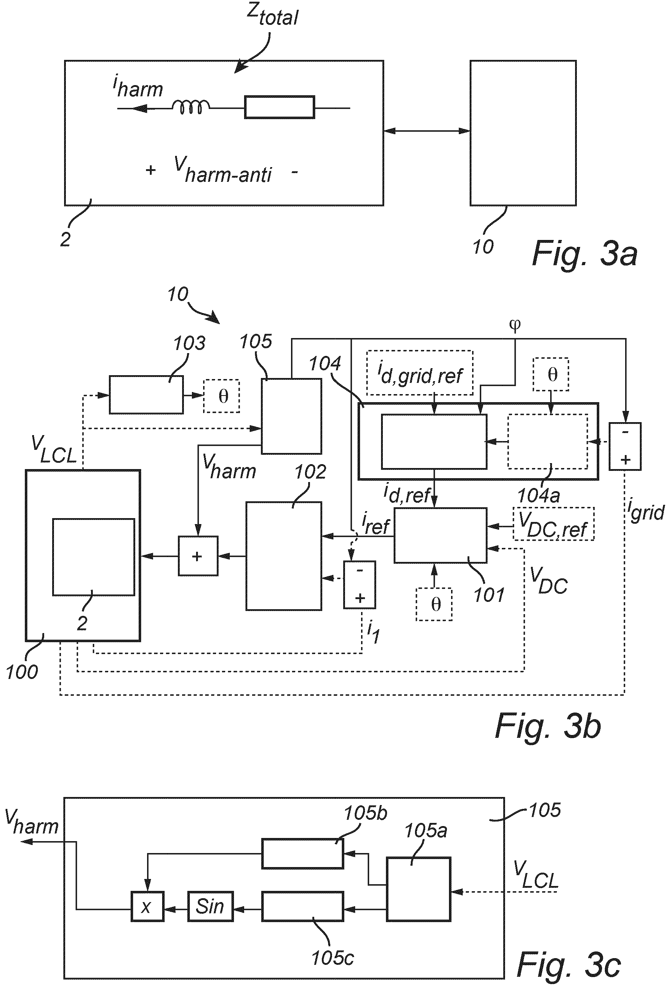

It has been realized by the present inventors that the already installed power converter device 10 not only is capable of providing reactive power control, but also control schemes for mitigating undesirable harmonics can be integrated in the control schemes of the power converter devices 10. To this end, voltage harmonics caused by the external loads 3 or even other mechanical loads 4 present in the facility 100 and connected to the electricity distribution network 2 may be controlled by emitting a periodic harmonic compensation current *iₕₐᵣₘ* from the power converter 10, which matches the frequency of the harmonic components present in the network 2. The emitted current *iₕₐᵣₘ* propagates through the grid impedance *Zₜₒₜₐₗ* as shown in Fig. 3a, thus inducing a voltage *Vₕₐᵣₘ₋ₐₙₜᵢ* over the grid impedance. Since the induced harmonic voltages over the grid impedance will be in anti-phase relative to the estimated original harmonics *Vₕₐᵣₘ* in the local grid 2, they will cancel each other out, thus mitigating the harmonic distortions. Thus, control schemes for harmonic mitigation will include determining harmonic signals by measurement or estimation in order to calculate the harmonic components being present in the network 2. Further, they will include knowledge of amplitude and phase shift between the AC voltage *V_{LCL}* and the induced voltage *Vₕₐᵣₘ₋ₐₙₜᵢ* over the grid impedance *Zₜₒₜₐₗ* as a result of the produced periodic harmonic compensation current *iₕₐᵣₘ* by the power converter device 10. In several embodiments, for instance, as shown in the example schematic block diagram of Fig. 3b, the harmonic control scheme may be implemented in conjunction with existing DC voltage link control schemes and/or the integrated reactive power compensation and control schemes. Similar to the reactive power control scheme discussed previously with reference to Fig. 1a and Fig. 2a - 2c, the control unit 15 (or the controller module 14 for that matter) may comprise the example reference generator module 101, the example current controller module 102, the example phase estimation module 103, the example integral (I) or (PI) controller module 104 for performing respective functions such as calculating and generating the current reference *I_{ref},* phase estimation, generating the reactive power compensation current *i_{d,ref}* or the like. The control unit 15 may further comprise a harmonic controller module 105, as shown in Fig. 3b, and in more detail in the example Fig. 3c.

The reference generator module 101, current controller module 102, the phase estimation module 103, the I or PI controller module 104 and the harmonic controller module 105 may be partly or entirely implemented by corresponding software functions.

To this end, the control unit 15 may be further configured to estimate a voltage harmonic component *Vₕₐᵣₘ* of the real-time AC input voltage *V_{LCL}* of the power converter device 10 having a first and/or a second harmonic frequency, wherein the voltage harmonic component is produced by the one or more electricity consumer devices 3 external to the power consumer device 4. The voltage harmonic component *Vₕₐᵣₘ* is representative of a total voltage harmonic component *Vₕₐᵣₘ* of the first and/or the second harmonic frequency in the electricity distribution network 2.

By first and/or second harmonic frequency of the harmonic component it is meant that the voltage harmonic component *Vₕₐᵣₘ* may comprise one or more harmonics or sub-components each having their own respective harmonic frequency. Thus, "first" and "second" here are only used as labels to differentiate such sub-components. It should be clear to the skilled person in the art that the estimated voltage harmonic component *Vₕₐᵣₘ* may have a third, fourth, fifths, or more harmonic sub-components. The most common harmonic sub-component frequencies may be denoted as the 5^{th}, 7^{th}, 11^{th}, or 13^{th} harmonic frequencies (frequencies that are five, seven, eleven, and thirteen-times the fundamental frequency of the gird network 2). It should be clear that other harmonic components than the mentioned 5^{th}, 7^{th}, 11^{th}, or 13^{th} harmonic frequencies may also be present in the estimated voltage harmonic of the network 2, and thus all discussions and advantages here analogously apply to those frequencies as well.

The voltage harmonic controller 105 may continuously estimate the voltage harmonics of the AC input voltage *V_{LCL}* by implementing a frequency filter enabled to identify signals of particular frequency. In some example implementations, the filter may be a bandpass filter or a Kalman filter. In some examples, a stationary Kalman filter 105a may be chosen as the real-time harmonic signal estimator as shown in Fig. 3c. Given a signal containing several sinusoidal components of different frequencies, the Kalman filter is configured to estimate states corresponding to the sinusoidal waveforms of a chosen set of frequencies. This corresponds to a bandpass filter which removes all other frequencies except the chosen frequencies. An advantage of using a Kalman filter instead of a regular bandpass filter is the ability to tune the filter bias towards measurements or modeled dynamics. In some example implementations, in order to evaluate the estimations provided by the Kalman filter for determining the voltage harmonics, fast Fourier transform (FFT) approach may be used to identify the voltage harmonic components. Outcome of the FFT calculations may be compared with the output estimations of the Kalman filter as an additional verification step to ensure accuracy of the Kalman filter estimations. The control unit 15 may be configured to determine an initial harmonic compensation current *iₕₐᵣₘ* having a frequency corresponding to the first and/or the second harmonic frequencies of the estimated voltage harmonic component *Vₕₐᵣₘ.* Accordingly, a sinusoidal current *i*_{*harm*,*s*} signal having the same frequency as the chosen harmonic frequencies is emitted from the power converter 10 towards the electricity distribution network 2. The phase shift and amplitude of the emitted current are iteratively changed e.g. by means of an amplitude control module 105b and a phase control module 105c in the harmonic controller module 105 in order to investigate which phase and/or amplitude values provide the largest impact in reducing the estimated voltage harmonic.

In order to generate the harmonic compensation signal *i_{harm,S}* based on the determined initial harmonic compensation current *iₕₐᵣₘ,* the power converter device 10 may further be configured to receive a second control signal from the control unit 15 causing the power converter 10 to do so. Further, the second control signal may cause the power converter 10 to provide the generated harmonic compensation signal to the electricity distribution network 2 in order to compensate for the estimated voltage harmonic component. The mechanisms of injecting the *i_{harm,s}* to the electricity distribution network 2 is similar to what was described earlier with respect to the reactive power compensation current signal, and steering of the switching operation of the bridge circuit 13 by means of respective PWM control signals. Typically, the control output from the harmonic controller module 105 may be a sinusoidal voltage *Vₕₐᵣₘ₋ₐₙₜᵢ* added to any existing PWM voltage reference, which results in generating a sinusoidal current with the same frequency.

It should be noted that since the total grid impedance *Zₜₒₜₐₗ* is unknown, calculating the exact values of the current amplitude and phase shift between the current output of the power converter 10 and the induced voltage over the grid impedance *Zₜₒₜₐₗ,* is cumbersome. Therefore, the counter-harmonic phase shift and amplitude factors will instead be estimated by sweeping all possible phase shifts and/or amplitude factors. As mentioned above, the initial harmonic compensation current *iₕₐᵣₘ* may have an arbitrary amplitude and/or phase values. The initial values of the initial emitted current *i*_{*harm*,*s*} will be continuously swept, i.e., adjusted by the harmonic controller module 105 of the control unit 15 in order to identify the best, i.e., the optimum phase shift and amplitude values providing the largest attenuation to the estimated voltage harmonics across the gird impedance. The optimum phase shift and amplitude factors provide a corresponding counter-harmonic voltage *Vₕₐᵣₘ₋ₐₙₜᵢ* induced at a total network impedance of the electricity distribution network 2 that minimizes the estimated voltage harmonic component *Vₕₐᵣₘ* for each of the respective first and/or second harmonic frequencies. The harmonic controller module 105 may generate the initial harmonic compensation current *iₕₐᵣₘ* having respective arbitrary amplitude and/or phase values for each of the estimated harmonic components having respective harmonic frequencies.

In one example, the phase shift that minimizes the estimated harmonic voltage can be found by allowing the phase angle of the harmonic controller module 105 output to sweep the interval [0, 2π]. In operation, and in some example implementations, sweeping the phase shift, may optionally be achieved by allowing the harmonic controller module 105 to output a sinusoidal wave of a slightly higher frequency ω₀+ω_{Δ} than the harmonic frequency of interest ω₀. This is equivalent to letting a wave with frequency ω₀ slide with a constantly changing phase shift, where the speed corresponds to ω_{Δ}. Once a satisfactory phase shift has been identified, an amplitude of the control signal *i*_{*harm*,*s*} which minimizes the voltage harmonic component *Vₕₐᵣₘ* may be estimated. This step may be implemented in a similar manner to the phase shift estimation scheme. A scaling variable γ which linearly scales the initial harmonic compensation current *iₕₐᵣₘ* may be initially set to zero. Since it is assumed that a close-to-optimum value for the phase shift already has been found, a linear increase of γ may initially dampen the estimated amplitude of the harmonic voltage. The scaling variable will further increase linearly until the harmonic amplitude no longer decreases. The identified value may be marked as the lowest amplitude value. To maintain robustness of the controller against disturbances, the iterative process of amplitude sweeping may end when no updated lowest harmonic amplitude factor has not been identified after a predetermined time window. The harmonic controller module 105 may then select the amplitude scaling which results in the lowest harmonic voltage amplitude and apply this to the harmonic compensation current *iₕₐᵣₘ.* The identified optimum values for the harmonic compensation signal *i*_{*harm*,*s*} are then maintained until a change in the harmonic components of the network voltage is detected. In further exemplary embodiments, other optimization approaches may be employed in order to find the optimum phase shift and amplitude values. For instance, a gradient descent optimization algorithm, or machine learning and deep learning algorithms constrained for optimization of the phase shift and amplitude values of harmonic compensation signals may be implemented.

In some example embodiments, the power converter device 10 may be further configured to perform a self-regulation step of the harmonics that are generated by the mechanical load connected to that power converter device 10. More specifically, the control unit 15 (or the controller module 14 for that matter) may be further configured to obtain a predicted value indicative of an internally generated voltage harmonic component *Vₕₐᵣₘ₋ᵢₙₜₑᵣₙₐₗ,* having a certain amount (i.e. phase shift and amplitude factor) and a certain harmonic frequency, which will be produced as a result of performing a certain task by the mechanical load 4. For instance, performing a welding operation by a robotic arm 4 may generate the 7^{th} voltage harmonic component. Thus, the power converter device 10 may generate and provide a respective harmonic compensation signal to the electricity distribution network 2 based on the predicted voltage harmonic component *Vₕₐᵣₘ.*

The present invention is further based on the realization that the existing power converter devices 10 can be utilized to counteract undesirable self-harmonics. In other words, self-generated harmonic components by the connected mechanical loads 4 may be predicted and counteracted preemptively, thus preventing the voltage in the electricity distribution network 2 from further harmonic distortions. To this end, data such as historic data collected on impact of carrying out various tasks by the mechanical loads may be recorded, analyzed and processed in time in order to find patterns of harmonic distortions generated for certain tasks. Therefore, when the mechanical load 4 is scheduled for performing the same or similar task, data on harmonic distortions generated for that task may be retrieved, e.g., from a memory module of the system or a database and appropriate countermeasures be applied to counteract the harmonic components for the scheduled task. Alternatively or additionally, the harmonic distortions for a scheduled task may be predicted by providing the voltage and/or current information to an artificial intelligence (AI) or machine learning model or the like. In exemplary implementations, the self-harmonics may be determined and counteracted by the controller module 14 of the power converter device 10, or by the control unit 15. Provisioning of the self-harmonic compensation signals may be triggered by receiving the second control signal from the controller module 14 or the control unit 15.

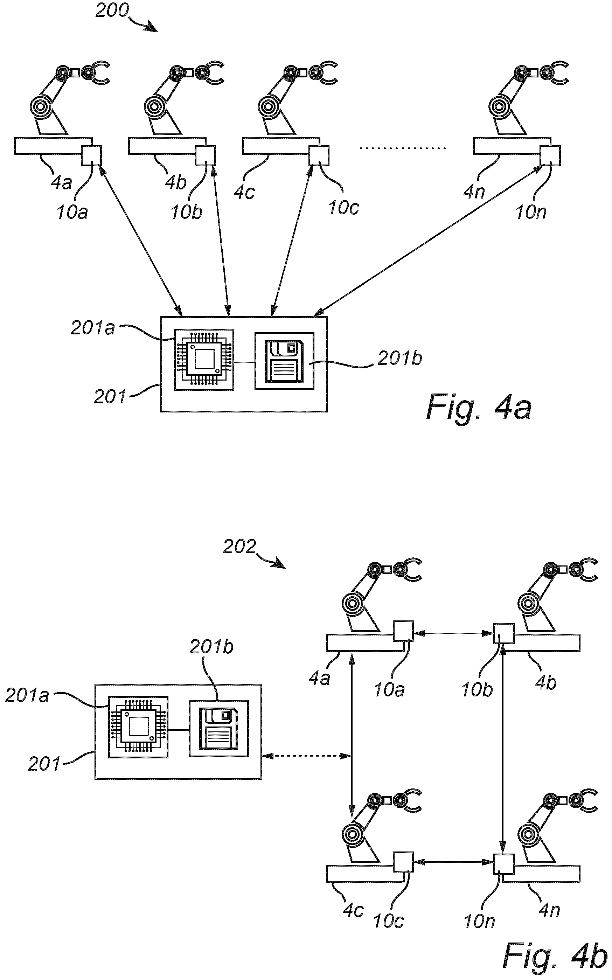

In Figs. 4a - 4b, a distributed control system 200 comprising a plurality of power converters 10a - 10n according to embodiments herein is illustrated. Each power converter device 10a - 10n is configured to be connected and provide electric power to a respective power consumer device 4a - 4n. Each power converter device 10 is configured to obtain a first control command signal. The control command signal may indicate which power converter device 10 is selected for providing compensatory measures to the network. When a respective power converter 10 is selected upon receiving the first control command signal, it will generate and provide a respective portion of the reactive power compensation signal, indicated by the first control command signal, to the electricity distribution network 2. Thus, the selected power converter 10 will at least partly compensate for and control the total reactive power consumption in the electricity distribution network 2. In some embodiments, each power converter device 10 may be configured to obtain a second control command signal. When selected upon receiving the second control command signal, the selected power converter 10 may generate and provide a respective portion of the harmonic compensation signal, indicated by the second control command signal, to the electricity distribution network. This way, the selected power converter 10 will at least partly compensate for the estimated voltage harmonic component *Vₕₐᵣₘ,* i.e., the total harmonic in the network 2. In some examples, all power converter device 10 in the network 200 may use the same estimated phase shift and amplitude values. However, in some examples, different power converter devices 10 may be assigned to mitigate different sub-components of the harmonics in the local grid 2. It is noted that the first and second control command signals may be the same as or similar to the first and second control signals mentioned with respect to a single power converter device 10, and the different label for the control signals is to distinguish the examples of the distributed control scheme.

The system 200 enables a distributed control scheme among the plurality of power converter devices 10a - 10n for reactive power and harmonic compensation for the electricity distribution network 2. This way further advantages are provided. By incorporating a plurality of power converter devices 10a - 10n each equipped with the integrated control schemes explained earlier in a cooperative network 200, the maximum capacity of reactive power and harmonic compensation that can be collectively generated and provided to the local grid 2 can be significantly elevated. Furthermore, reactive power compensation can still be effectively regulated even when some of the power converter devices 10 in the system 200 operate at their peak active power delivery cycles and are unable to contribute to the reactive power and harmonic control schemes. What is more is that the total amount of reactive power compensation that must be provided to counteract a certain amount of determined reactive power or harmonics being present in the local grid 2, can be effectively divided amongst the power converter devices based on their individual capacities and active power delivery conditions. Thus, each power converter device 10 will be responsible for delivery of a respective portion of the reactive power and/or harmonic compensation signals to the local grid 2.

The distributed system 200 may generally require establishing a coordination and/or communication scheme between the different power converters 10. This is because independent attempts to counteract the network distortions by each power converter 10 may lead to instability in the local grid 2 and power delivery operations. Coordination between the power converters 10 could conceivably be achieved in several ways. For instance, every power converter's 10 respective portion of the reactive power and harmonics compensation signal could be pre-programmed into the controller module 14 of each power converter 10. This could be implemented by assigning a predetermined portion calculated based on scheduled tasks for the respective mechanical loads 4 at certain timepoints, or as a portion dynamically calculated based on changes in the active power delivery cycles of the power converter devices 10. In either example, the first and/or second control command signals may be provided to each power converter device 10 in the form of manual control data inputted by an operator through a user interface separately or at the same time of providing the scheduled task policies and instructions to each power converter device 10.

In some embodiments, such as example implementations of the system 200 shown in Figs. 4a - b, the coordination may be handled by a central master controller 201 which may be configured to obtain data including simulation and/or senser measurement data of the active power delivery cycles and power needs of the mechanical loads 4, as well as the data related to characterizing parameters of the local grid network 2 such as the AC voltage *V_{LCL}* and/or the grid current *i_{grid}* parameters. The central controller 201 may comprise processing circuitry 201a, memory modules 201b, and/or any other operational modules such as receiving, communication, analysis modules (not specifically shown) in order to carry out some or all of the operations described herein. The central controller 201 may be configured to access any performance information and/or sensor and estimation data (real-time and/or historical) of each power converter device 10. The central controller 201 may obtain information about active power delivery and mechanical load cycles, operation schedule, reactive power generation capacity, operating temperature, AC input voltage *V_{LCL},* internal converter current *i*₁, harmonic component frequencies, and/or compensatory values such as phase shift and/or amplitude estimations, etc. as a list on non-limiting examples. For instance, data indicative of operating temperature of each power converter device 10 may be periodically obtained by the central controller 201.

Further, the central controller 201 may be configured to centrally determine the reactive power consumption and/or harmonics in the local grid 2, as well as compensation capacity of each power converter device 10 in the system 200 in order to assign the respective portion of the reactive power and/or harmonics compensation signals to respective power converter devices 10. **In** some embodiments, the central controller 201 may be the same as the control unit 15, which is enabled with further control privileges in order to manage a system or network 200 of several power converter devices 10 instead of only one device 10 as described with reference to Figs. 1 - 3 earlier. The central controller 201 may be adapted to send and/or receive real-time or historic information, the first and/or second control command signals, or any other type of communication to and from the respective power converter devices 10 in the system 200.

In some embodiments, the communication network comprised in the communication network infrastructure of the industrial facility 100 may be used for communication between the central controller 201 and the power converter devices 10. Such communication links may be implemented through wired and/or wireless communication technologies such as wired LAN or Ethernet, CAN, or any wireless link such as wireless LAN, Wi-Fi, Bluetooth, etc., as known in the art.

In some embodiments, the plurality of power converter devices 10a - 10n may be arranged in an interconnected power converter communication network. In some embodiments the interconnected power converter communication network may be a peer-to-peer communication network 202 implemented between the independently operating power converter devices 10, as shown in the example of Fig. 1b. Thus, each power converter device 10 may be provided access to the measured and/or estimated data of any or all other power converter device 10 including their active power delivery and mechanical load cycles, operation schedule, reactive power generation capacity, operating temperature, AC input voltage *V_{LCL},* internal converter current *i*₁, harmonic components frequencies and/or harmonic compensatory values such as phase shift and/or amplitude estimations, etc. as a list on non-limiting examples. In some example implementation, the peer-to-peer network 202 may also be connected to the central controller 201 in order to exchange data and/or obtain control command signals. Transmitting and/or receiving control command signals and data between the central controller 201 and the individual power converter devices 10 or within the peer-to-peer network 202 may be implemented by any communication technologies established in the art as mentioned above.

In some embodiments, the first control command signal in either of the above-mentioned non-limiting power converter device coordination examples, may be adapted such that the amount of respective portion of the reactive power compensation signal to be generated by each selected power converter device 10 is assigned based on average active power consumption data. More specifically, sensor data indicative of an average active power consumption of the power consumer device 4 connected to each power converter device 10 that may be measured over a predefined period of time could be used by the central controller 201 or the operator of the system for configuring the reactive power compensation division and allocation. In other words, the power converter device 10 that will supply active power to its mechanical load 4 for performing more average mechanical work within the predetermined time slot such as an example 24-hour or 48-hour time window, could be assigned a smaller portion of the reactive power compensation duty during the same time window, and *vice versa.* This way, allocation of respective reactive power compensation signals could be dynamically adjusted based on each power converter's capacity without compromising its active power delivery duties. Similarly, allocation of harmonic compensation signals to each power converter device 10 may be performed based on the average active power delivery commitment of that power converter device 10. As mentioned above, the first and/or second signals formed based on the average active power delivery requirements may be pre-programmed and provided by the system operator and/or handled entirely automatically by the central controller 201. It is clearly conceivable that the power converter devices 10 in the peer-to-peer network 202 may be configured to access average active power delivery schedules of the other units and adjust their respective reactive power and/or harmonic compensation signals accordingly. In some example implementations, a combination of the above coordination approaches may be utilized.

In yet another example implementation, the sensor measurement data and/or estimated data of the operating temperature of each power converter device 10 may obtained and utilized by the system operator and/or the central controller 201 and/or the independent power converter device 10 units in the peer-to-peer network 202 in order to allocate the reactive power and/or harmonics compensation portions. For instance, sensor measurements and/or estimations indicative of a real-time active power delivery status of that power converter device 10 may be obtained. Furthermore, data indicative of an operating temperature of the power converter device 10 may be obtained. The first control command signal may be adapted to assign an amount of the respective portion of the reactive power compensation signal to be generated by each selected power converter device 10 based on the above obtained data. This is to ensure that the operating temperature of each selected power converter device is maintained within a predetermined temperature range. This example implementation is similar to the embodiment described for a single power converter device 10 in the foregoing. The difference here is that the above temperature-based selection scheme will be applied to select certain power converter devices among the plurality of power converter devices 10a - 10n in order to maintain their temperature with the desirable range. Similar arguments and advantages presented for a single unit earlier also applies in this example implementation.

In yet another example implementation of the distributed control system 200, the second signal sent to each power converter device 10 for providing respective harmonics compensation signals may be adapted based on physical proximity of each power converter device 10 to a source of network distortion, i.e., the source in the local grid 2 that is producing the specific harmonic distortions. To this end, the source of the harmonics will be localized in the electricity distribution network 2, and the power converter device 10 which is physically closest to that source will be identified. Accordingly, the respective portion of the harmonic compensation signal of each selected power converter device 10 may be assigned an amount and a corresponding first and/or second harmonic frequency to counteract an identified specific voltage harmonic sub-component. This may be done based on data (sensor measurements and/or estimations) indicative of a physical proximity of the selected power converter device 10 to the external load 3 which is producing that identified voltage harmonic sub-component in the electricity distribution network 2. It should be clear that the above-mentioned harmonic sub-component may be produced by another mechanical load 4 in the facility 100. The operations of harmonic source localization, and assignment of the certain power converter device to provide the compensation signal may be carried out by the central controller 201 or handled by the peer-to-peer network 202.

In yet another example implementation of the distributed control system 200, each power converter device 10 may further be configured to obtain a predicted value indicative of an internally generated voltage harmonic component *Vₕₐᵣₘ₋ᵢₙₜₑᵣₙₐₗ,* having a certain amount and a certain harmonic frequency. The certain amount (having a certain phase shift and amplitude) will be produced as a result of performing a certain task by the power consumer device 4 connected to that power converter device 10. Accordingly, the power converter device 10 may be further configured to generate and provide a respective harmonic compensation signal to the electricity distribution network 2 based on the predicted voltage harmonic component. In exemplary implementations, the self-harmonics may be determined and counteracted by the controller module 14 of the power converter device 10, or by the central controller 201. Provisioning of the self-harmonic compensation signals may be triggered by receiving the second control command signal from the controller module 14 or the central controller 201.

This example is also similar to the previously described self-regulation step of the self-harmonics performed by an individual power converter device 10 and thus will not be explained in more detail here in for the sake of brevity.

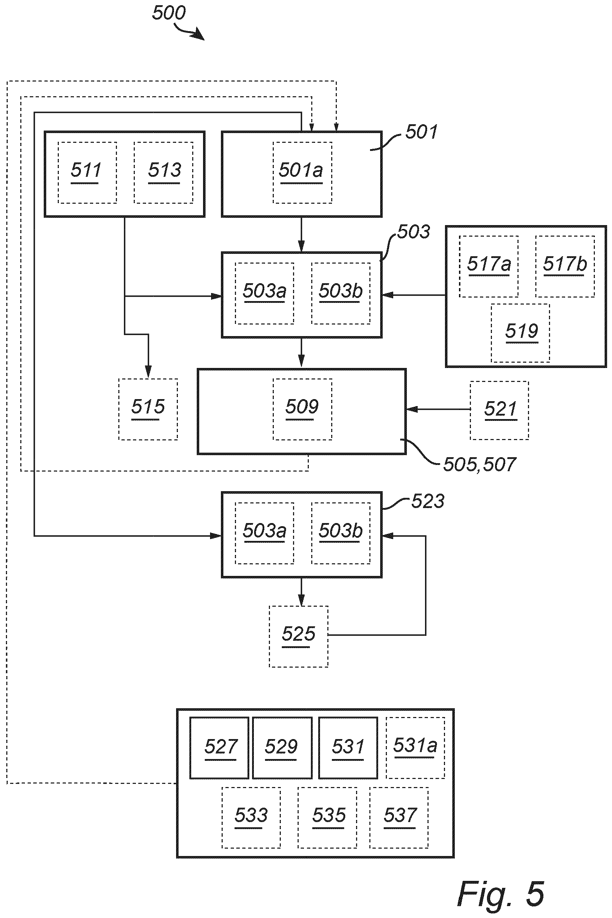

In Fig. 5, a schematic flowchart of an exemplary method **500** according to several embodiments herein is illustrated. The method is a computer-implemented method for controlling reactive power consumption in an electricity distribution network 2, wherein the method is at least partly implemented in a power converter device 10 configured to be connected and provide electric power to a power consumer device 4 comprised in the electricity distribution network 2. The method **500** may further include steps for mitigating and controlling voltage harmonic components in the local grid network 2.

The power converter device 10 comprises or is in communication with a control unit 15. In some examples, steps and embodiments of the method **500** may be implemented by means of the control unit 15, and/or the controller module 14 as adapted to the specific design and configuration requirements of each implementation.

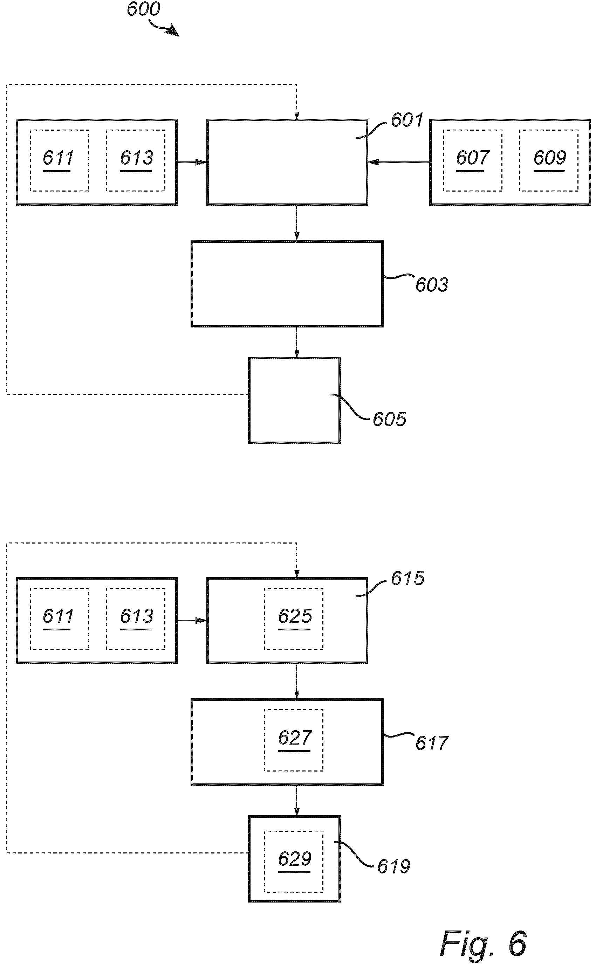

Fig. 6 shows a schematic flowchart of an exemplary method **600** according to several embodiments herein. The method **600** is a computer-implemented method for controlling reactive power consumption in an electricity distribution network 2, wherein the method is implemented by the distributed control system 200 comprising a plurality of power converter devices 10a - 10n as described in the foregoing. Further, the method **600** may be at least partly or entirely by the central controller 201, or the peer-to-peer network 202 of the distributed control system 200. The method **600** further includes steps for controlling and mitigating voltage harmonic components of the electricity distribution network 2. It should be appreciated that all discussions and advantages described with respect to the power converter device 10, the control unit 15, the central controller 201, the system 200, and peer-to-peer network 202 also analogously apply to the embodiments of the methods herein, specifically to embodiments of method **500** and method **600** described in the following.

The method **500** comprises determining **501** based on data representative of one or more real-time characteristics of the electricity distribution network 2, a reactive current indicator parameter. The reactive current indicator parameter is associated with a total reactive power consumption by one or more electricity consumer devices 3 external to the power consumer device 4. The external loads 3 are connected to the electricity distribution network 2. The method **500** further comprises calculating **503** a corresponding reactive power compensation current based on the determined reactive current indicator parameter to counteract the reactive power consumption in the electricity distribution network 2. Further, the method **500** comprises receiving **505** a first control signal from the control unit 15 at the power converter device 10. Even further, the method comprises, upon receiving the first control signal, generating **507** a corresponding reactive power compensation signal based on the calculated reactive power compensation current without compromising delivery of electric power to the power consumer device 4.

In several embodiments, the data associated with one or more real-time characteristics of the electricity distribution network 2 may comprise sensor measurement data and/or simulation data. Accordingly, the method **500** may further comprise obtaining **501a** data indicative of the one or more real-time characteristics of the electricity distribution network 2. The one or more real-time characteristics of the electricity distribution network 2 may comprise a real-time AC current flowing in the electricity distribution network 2, i.e., the grid current *i_{grid}* and a real-time AC input voltage *V_{LCL}* of the power converter device 10. The method may further comprise determining **501** the reactive current indicator parameter by calculating a voltage-to-current phase angle shift derived based on the obtained data in step **501a.** further, the method may comprise determining **503a** an initial reactive power compensation current *i_{d,ref}* by calculating a deviation between the determined reactive current indicator parameter and a predetermined setpoint for reactive current of the electricity distribution network 2. Additionally, the method may comprise determining **503b** a calibrated portion *i_{d,ref,C}* of the initial reactive power compensation current adjusted based at least on a respective amount of active power consumption of the power consuming device 4.

Accordingly, the method **500** may further comprise generating **507** the reactive power compensation signal based on the calibrated portion *i_{d,ref,C}* of the initial reactive power compensation current *i_{d,ref}.* Even further, the method may comprise providing **509** the generated reactive power compensation signal *i_{d,ref,S}* to the electricity distribution network 2.

In several embodiments, the method **500** may further comprise obtaining **511** a predetermined DC output voltage setpoint *V_{DC,ref}* and sensor measurement and/or simulation data indicative of a real-time DC output voltage *V_{DC}* of the power converter device 10 to be provided to the power consumer device 4. Further, the method **500** may comprise determining **513** a reference current *I_{ref}* in phase with the AC input voltage *V_{LCL}* of the power converter device 10 based on an estimated phase angle θ of the real-time AC input voltage of the power converter device 10. Further, reference current *I_{ref}* is determined based on a calculated deviation between the predetermined DC output voltage setpoint and the real-time DC output voltage of the power converter device 10. The determined reference current may be indicative of the active electric power consumption by the power consumer device 4. The method **500** may further comprise providing **515** the determined reference current to the electricity distribution network 2 in order to minimize the deviation between the DC output voltage of the power converter device 10 and the predetermined DC output voltage setpoint.

In some exemplary embodiments, the method **500** may further comprise determining **517a** a first threshold value for the initial reactive power compensation current. The first threshold value may be set to be lower than a predefined peak current capacity of the power converter device 10. Further the method may comprise determining **517b** a second threshold value for the initial reactive power compensation current corresponding to a difference between the predefined peak current capacity of the power converter device 10 and the determined reference current in phase with the AC input voltage.

In some example embodiments, the method **500** may further comprise determining **503b** the calibrated portion of the initial reactive power compensation current by calculating **519** the minimum value between the initial reactive power compensation current and the first and the second threshold values.

In some exemplary embodiments, the method may further comprise regulating **521,** by the first control signal received from the control unit 15, an amount of the reactive power compensation signal *i_{d,ref,S}* to be generated by the power converter device 10 based on data indicative of a real-time active power delivery status of the power converter device 10 such that an operating temperature of the power converter device 10 may be maintained within a predetermined temperature range. Therefore, the method may comprise maintaining the operating temperature of the power converter device 10 within the predetermined temperature range by generating the specific amount of the reactive power compensation signal *i_{d,ref,S}* by the power converter device 10.

In some example embodiments, the method may further comprise estimating **523** a voltage harmonic component *Vₕₐᵣₘ* of the real-time AC input voltage *V_{LCL}* of the power converter device 10 having a first and/or a second harmonic frequency. The voltage harmonic component may be produced by the one or more electricity consumer devices 3 external to the power consumer device 4. Further, the method **500** may comprise determining **525** an initial harmonic compensation current having a frequency corresponding to the first and/or the second harmonic frequencies of the estimated voltage harmonic component. The method **500** may further comprise receiving **527** a second control signal from the control unit 15 at the power converter 10 and upon receiving the second control signal, generating **529** a harmonic compensation signal *i*_{*harm*,*s*} based on the determined initial harmonic compensation current *iₕₐᵣₘ.* The method **500** may further comprise providing **531** the generated harmonic compensation signal to the electricity distribution network 2 in order to compensate for the estimated voltage harmonic component.

In some embodiment, the method may further comprise continuously estimating **523a** the voltage harmonic component *Vₕₐᵣₘ* based on obtained data associated with the real-time AC input voltage. The method may further comprise continuously adjusting **523b** a phase and an amplitude component of the determined initial harmonic compensation current *iₕₐᵣₘ* until an optimum phase shift and an amplitude factor for the generated harmonic compensation signal are identified. The method **500** may further comprise minimizing **531** the estimated voltage harmonic component for each of the respective first and/or second harmonic frequencies by applying **531a** the optimum phase shift and amplitude factors to induce a corresponding counter-harmonic voltage *Vₕₐᵣₘ₋ₐₙₜᵢ* at a total network impedance of the electricity distribution network 2.

In some embodiments, the method **500** may further comprise obtaining **533,** for the power converter device 10, a predicted value indicative of an internally generated voltage harmonic component *Vₕₐᵣₘ₋ᵢₙₜₑᵣₙₐₗ* having a certain amount and a certain harmonic frequency. The certain amount, i.e., amplitude and phase shift, as well as the specific harmonic frequency of the self-harmonic component will be produced as a result of performing a certain task by the power consumer device 4 connected to the power converter device 10. The method **500** may further comprise generating **535** a respective harmonic compensation signal for the power converter device 10 based on its predicted voltage harmonic component, and providing **537** the generated respective harmonic compensation signal to the electricity distribution network 2.

In several embodiments, the method **600** of Fig. 6 is a computer-implemented method for controlling reactive power consumption in an electricity distribution network 2, wherein the method is implemented by a distributed control system 200 comprising a plurality of power converter devices 10a - 10n. Each power converter device 10 is configured to be connected, and to provide electric power to a respective power consumer device 4. The method **600** comprises obtaining **601,** at each power converter device 10, a first control command signal. When the power converter device 10 is selected upon receiving the first control command signal, the method further comprises generating **603** a respective portion of the reactive power compensation signal indicated by the first control command signal. Further, the method comprises providing **605** the generated respective portion to the electricity distribution network 2 in order to at least partly compensate for and control the total reactive power consumption in the electricity distribution network 2.

In some embodiments, the method may further comprise determining **607** an amount of the respective portion of the reactive power compensation signal to be generated by each selected power converter device 10 based on obtained data indicative of an average active power consumption of the power consumer device 4 connected to that power converter device 10 measured over a predefined period of time. Further, the method may comprise assigning **609,** as indicated by the first control command signal, the amount of the respective portion of the reactive power compensation signal to each power converter device 10.

In some embodiments, the method **600** may further comprise determining **611** an amount of the respective portion of the reactive power compensation signal to be generated by each selected power converter device 10 based on obtained data indicative of a real-time active power delivery status of that power converter device 10. More specifically, the amount of the respective portion of the reactive power compensation signal for each power converter device will be determined such that an operating temperature of each selected power converter device 10 is maintained within a predetermined temperature range. The method may further comprise assigning **613,** as indicated by the first control command signal, the amount of the respective portion of the reactive power compensation signal to each power converter device 10. Therefore, the method may comprise maintaining the operating temperature of each power converter device 10 within the predetermined temperature range by assigning the respective amount of the reactive power compensation signal *i_{d,ref,S}* as indicated by the first control command signal to each power converter device 10.

In some embodiments the method may further comprise obtaining **615,** at each power converter device 10, a second control command signal. Further, when the power converter device 10 is selected upon receiving the second control command signal, the method may comprise generating **617** a respective portion of the harmonic compensation signal indicated by the second control command signal. Further, the method may comprise providing **619** the generated respective portion to the electricity distribution network 2 in order to at least partly compensate for the estimated voltage harmonic component *Vₕₐᵣₘ.*

In some exemplary embodiments the method **600** may further comprise identifying **621** a specific voltage harmonic sub-component produced by an external load 3 in the electricity distribution network 2. Further, the method may comprise assigning **623** an amount and a corresponding first and/or second harmonic frequency to the respective portion of the harmonic compensation signal of each selected power converter device 10 to counteract the identified voltage harmonic sub-component based on sensor data indicative of a physical proximity of that selected power converter device 10 to that external load.

In some embodiments, similar to some embodiments of method **500** mentioned earlier, the method **600** may further comprise obtaining **625,** for each power converter device 10, a predicted value indicative of an internally generated voltage harmonic component *Vₕₐᵣₘ₋ᵢₙₜₑᵣₙₐₗ,* having a certain amount and a certain harmonic frequency, which will be produced as a result of performing a certain task by the power consumer device 4 connected to that power converter device 10. The method may further comprise generating **627** a respective harmonic compensation signal for each power converter device 10 based on its predicted voltage harmonic component, and providing **629** the generated respective harmonic compensation signal to the electricity distribution network 2.

It is noted that in several embodiments, some or all of the method steps of the methods **500** or **600** may be performed iteratively. For instance, after a reactive power compensation signal is provided to the local grid 2, the method **500** may return to the initial steps of data acquisition in order to continuously monitor parameter changes in the local grid 2 and provide an updated reactive power and/or harmonics compensation signal addressing the altered network parameters. Similarly, in method **600,** respective portions of the provided reactive power compensation and/or harmonic mitigation signals by each power converter device 10 may be periodically updated based on the network conditions. For instance, in a non-limiting example, if a certain power converter device provided reactive power compensation at 70% of its maximum capacity, it may be instructed to provide an updated lower amount e.g., at 50% of maximum capacity or an updated larger amount, e.g., at 90% of its maximum capacity based on changed reactive power consumption conditions in the network or the like.

The different features and steps of the embodiments described herein may be combined in other combinations than those described. It should be noted that the word "comprising" does not exclude the presence of other elements or steps than those listed and the words "a" or "an" preceding an element do not exclude the presence of a plurality of such elements. It should further be noted that reference signs do not limit the scope of the claims, that the disclosure may be at least in part implemented by means of both hardware and software, and that several "modules" or "units" may be represented by the same item of hardware. As used herein, the term "if" may be construed to mean "when or "upon" or "in response to determining or "in response to detecting" depending on the context. Similarly, the phrase "upon determining" may be construed to mean "when it is determined" or "in response to determining" or "upon detecting and identifying occurrence of an event" or "in response to detecting occurrence of an event" depending on the context. The term "obtaining" is herein to be interpreted broadly and encompasses receiving, retrieving, collecting, acquiring, and so forth directly and/or indirectly between two entities configured to be in communication with each other or with other external entities. Although the figures may show a specific order of method steps, the order of the steps may differ from what is depicted. In addition, two or more steps may be performed concurrently or with partial concurrence.

The following non-exhaustive and non-limiting list of enumerated exemplary embodiments (EEE) represent aspects, objectives, features and advantages of the present invention.
EEE 1. A power converter device 10 configured to be connected, and provide electric power to a power consumer device 4 comprised in an electricity distribution network 2;
   wherein the power converter device 10 comprises or is in communication with a control unit 15 configured to: estimate, based on data representative of one or more real-time characteristics of the electricity distribution network 2, a reactive current indicator parameter associated with a total reactive power consumption by one or more electricity consumer devices 3 external to the power consumer device 4 and connected to the electricity distribution network 2; and calculate a corresponding reactive power compensation current *i_{d,ref}* based on the determined reactive current indicator parameter to counteract the reactive power consumption in the electricity distribution network 2; wherein the power converter device 10 is configured to receive a first control signal from the control unit 15 causing the power converter 10 to: generate a corresponding reactive power compensation signal based on the calculated reactive power compensation current *i_{d,ref}* without compromising delivery of electric power to the power consumer device 4.
EEE 2. The power converter device 10 according to EEE 1, wherein data associated with one or more real-time characteristics of the electricity distribution network 2 comprises sensor measurement data and/or simulation data; and wherein the control unit 15 is further configured to:
   obtain data indicative of the one or more real-time characteristics of the electricity distribution network 2 comprising: a real-time AC current *i_{grid}* flowing in the electricity distribution network 2; and a real-time AC input voltage *V_{LCL}* of the power converter device 10; estimate the reactive current indicator parameter by calculating a voltage-to-current phase shift *φ* derived based on the obtained data; determine an initial reactive power compensation current *i_{d,ref}* based on a deviation between the determined reactive current indicator parameter and a predetermined setpoint for reactive current of the electricity distribution network 2; and determine a calibrated portion *i_{d,ref,C}* of the initial reactive power compensation current *i_{d,ref}* adjusted based at least on a respective amount of active power consumption of the power consuming device 4; wherein the power converter device 10 is further configured to: generate the reactive power compensation signal based on the calibrated portion; and provide the generated reactive power compensation signal to the electricity distribution network 2.
EEE 3. The power converter device 10 according to EEE 2, wherein the control unit 15 is further configured to: obtain a predetermined DC output voltage setpoint and sensor measurement and/or simulation data indicative of a real-time DC output voltage of the power converter device 10 to be provided to the power consumer device 4; determine a reference current *I_{ref}*) in phase with the AC input voltage *V_{LCL}* of the power converter device 10 based on an estimated phase angle of the real-time AC input voltage *V_{LCL}* of the power converter device 10, and a calculated deviation between the predetermined DC output voltage setpoint and the real-time DC output voltage of the power converter device 10; wherein the determined reference current *I_{ref}* is indicative of the active electric power consumption by the power consumer device 4; and wherein the power converter device 10 is further configured to provide the determined reference current *I_{ref}* to the electricity distribution network 2 in order to minimize the deviation between the DC output voltage of the power converter device 10 and the predetermined DC output voltage setpoint.
EEE 4. The power converter device 10 according to EEE 3, wherein the control unit 15 is further configured to: determine a first threshold value for the initial reactive power compensation current *i_{d,ref},* the first threshold value set to be lower than a predefined peak current capacity of the power converter device 10; and determine a second threshold value for the initial reactive power compensation current corresponding to a difference between the predefined peak current capacity of the power converter device 10 and the determined reference current *I_{ref}* in phase with the AC input voltage *V_{LCL}.*
EEE 5. The power converter device 10 according to EEE 4, wherein the control unit is further configured to: determine the calibrated portion *i_{d,ref,C}* of the initial reactive power compensation current *i_{d,ref}* by calculating a minimum value between: the initial reactive power compensation current and the first and the second threshold values.
EEE 6. The power converter device 10 according to any of preceding EEEs, wherein the first control signal received from the control unit is adapted to regulate an amount of the reactive power compensation signal to be generated by the power converter device 10 based on data indicative of a real-time active power delivery status of the power converter device 10 such that an operating temperature of the power converter device 10 is maintained within a predetermined temperature range.
EEE 7. The power converter device 10 according to any one of EEEs 2 - 6, wherein the control unit is further configured to: estimate a voltage harmonic component *Vₕₐᵣₘ* of the real-time AC input voltage *V_{LCL}* of the power converter device 10 having a first and/or a second harmonic frequency, the voltage harmonic component, being produced by the one or more electricity consumer devices 3 external to the power consumer device 4; determine an initial harmonic compensation current *iₕₐᵣₘ* having a frequency corresponding to the first and/or the second harmonic frequencies of the estimated voltage harmonic component; wherein the power converter device 10 is further configured to receive a second control signal from the control unit 15 causing the power converter 10 to: generate a harmonic compensation signal based on the determined initial harmonic compensation current *iₕₐᵣₘ;* and provide the generated harmonic compensation signal to the electricity distribution network 2 in order to compensate for the estimated voltage harmonic component *Vₕₐᵣₘ.*
EEE 8. The power converter device 10 according to EEE 7, wherein the control unit 15 is further configured to: continuously estimate the voltage harmonic component *Vₕₐᵣₘ* based on obtained data associated with the real-time AC input voltage *V_{LCL};* and
   continuously adjust a phase and an amplitude component of the determined initial harmonic compensation current *iₕₐᵣₘ* until an optimum phase shift and an amplitude factor for the generated harmonic compensation signal are identified; wherein the optimum phase shift and amplitude factors provide a corresponding counter-harmonic voltage *Vₕₐᵣₘ₋ₐₙₜᵢ* induced at a total network impedance of the electricity distribution network that minimizes the estimated voltage harmonic component *Vₕₐᵣₘ* for each of the respective first and/or second harmonic frequencies.
EEE 9. The power converter device 10 according to any one of preceding EEEs, wherein the control unit 15 is further configured to: obtain a predicted value indicative of an internally generated voltage harmonic component *Vₕₐᵣₘ₋ᵢₙₜₑᵣₙₐₗ,* having a certain amount and a certain harmonic frequency, which will be produced as a result of performing a certain task by the power consumer device 4 connected to the power converter device 10; and
   generate and provide a respective harmonic compensation signal to the electricity distribution network 2 based on the predicted voltage harmonic component.
EEE 10. A distributed control system 200 comprising a plurality of power converter devices 10a - 10n according to any one of embodiments 1 - 9, wherein each power converter device 10 is configured to be connected and provide electric power to a respective power consumer device 4; and wherein each power converter device 10 is configured to obtain a first control command signal, and when selected upon receiving the first control command signal:
   generate and provide a respective portion of the reactive power compensation signal, indicated by the first control command signal, to the electricity distribution network 2 in order to at least partly compensate for and control the total reactive power consumption in the electricity distribution network 2.
EEE 11. The distributed control system according to EEE 10, wherein the first control command signal is adapted to assign an amount of the respective portion of the reactive power compensation signal to be generated by each selected power converter device 10 based on data indicative of an average active power consumption of the power consumer device 4 connected to that power converter device 10 measured over a predefined period of time.
EEE 12. The distributed control system according to EEE 10, wherein the first control command signal is adapted to assign an amount of the respective portion of the reactive power compensation signal to be generated by each selected power converter device 10 based on data indicative of a real-time active power delivery status of that power converter device 10 such that an operating temperature of the power converter device 10 is maintained within a predetermined temperature range.
EEE 13. The distributed control system according to any one of EEEs 10 - 12, wherein each power converter device 10 is configured to obtain a second control command signal, and when selected upon receiving the second control command signal:
   generate and provide a respective portion of the harmonic compensation signal, indicated by the second control command signal, to the electricity distribution network 2 in order to at least partly compensate for the estimated voltage harmonic component *Vₕₐᵣₘ.*
EEE 14. The distributed control system according to EEE 13, wherein the respective portion of the harmonic compensation signal of each selected power converter device 10 is assigned an amount and a corresponding first and/or second harmonic frequency to counteract an identified specific voltage harmonic sub-component based on data indicative of a physical proximity of the selected power converter device 10 to an external load 3 which is producing that identified voltage harmonic sub-component in the electricity distribution network 2.
EEE 15. The distributed control system according to any one of EEEs 10 - 14, wherein each power converter device 10 is further configured to: obtain a predicted value indicative of an internally generated voltage harmonic component (*Vₕₐᵣₘ₋ᵢₙₜₑᵣₙₐₗ*), having a certain amount and a certain harmonic frequency, which will be produced as a result of performing a certain task by the power consumer device 4 connected to that power converter device 10; and generate and provide a respective harmonic compensation signal to the electricity distribution network 2 based on the predicted voltage harmonic component.
EEE 16. A computer-implemented method 500 for controlling reactive power consumption in an electricity distribution network 2, wherein the method is at least partly implemented in a power converter device 10 configured to be connected, and provide electric power to a power consumer device 4 comprised in the electricity distribution network 2; wherein the power converter device 10 comprises or is in communication with a control unit 15; wherein the method comprises: determining 501 based on data representative of one or more real-time characteristics of the electricity distribution network 2, a reactive current indicator parameter associated with a total reactive power consumption by one or more electricity consumer devices 3 external to the power consumer device 4 and connected to the electricity distribution network 2; calculating 503 a corresponding reactive power compensation current based on the determined reactive current indicator parameter to counteract the reactive power consumption in the electricity distribution network 2; receiving 505 a first control signal from the control unit 4 at the power converter device 10; and upon receiving the first control signal: generating 507 a corresponding reactive power compensation signal based on the calculated reactive power compensation current without compromising delivery of electric power to the power consumer device 4.
EEE 17. The method 500 according to EEE 16, wherein data associated with one or more real-time characteristics of the electricity distribution network 2 comprises sensor measurement data and/or simulation data; and wherein the method further comprises:
   obtaining 501a data indicative of the one or more real-time characteristics of the electricity distribution network 2 comprising: a real-time AC current *i_{grid}* flowing in the electricity distribution network 2; and a real-time AC input voltage *V_{LCL}* of the power converter device 10;
   determining 501 the reactive current indicator parameter by calculating a voltage-to-current phase angle shift *φ* derived based on the obtained data; determining 503a an initial reactive power compensation current *i_{d,ref}* by calculating a deviation between the determined reactive current indicator parameter and a predetermined setpoint for reactive current of the electricity distribution network 2; and determining 503b a calibrated portion *i_{d,ref,C}* of the initial reactive power compensation current *i_{d,ref}* adjusted based at least on a respective amount of active power consumption of the power consuming device 4; wherein the method further comprises:
      generating 507 the reactive power compensation signal based on the calibrated portion *i_{d,ref,C};* and providing 509 the generated reactive power compensation signal to the electricity distribution network 2.
EEE 18. The method 500 according to EEE 17, wherein the method further comprises: obtaining 511 a predetermined DC output voltage setpoint and sensor measurement and/or simulation data indicative of a real-time DC output voltage of the power converter device 10 to be provided to the power consumer device 4; determining 513 a reference current *I_{ref}* in phase with the AC input voltage *V_{LCL}* of the power converter device 10 based on an estimated phase angle of the real-time AC input voltage *V_{LCL}* of the power converter device 10, and a calculated deviation between the predetermined DC output voltage setpoint and the real-time DC output voltage of the power converter device 10; wherein the determined reference current *I_{ref}* is indicative of the active electric power consumption by the power consumer device 4; and wherein the method further comprises: providing 515 the determined reference current *I_{ref}* to the electricity distribution network 2 in order to minimize the deviation between the DC output voltage of the power converter device 10 and the predetermined DC output voltage setpoint.
EEE 19. The method 500 according to EEE 18, wherein the method further comprises: determining 517a a first threshold value for the initial reactive power compensation current *i_{d,ref},* the first threshold value set to be lower than a predefined peak current capacity of the power converter device 10; and determining 517b a second threshold value for the initial reactive power compensation current *i_{d,ref}* corresponding to a difference between the predefined peak current capacity of the power converter device 10 and the determined reference current *I_{ref}* in phase with the AC input voltage *V_{LCL}.*
EEE 20. The method 500 according to EEE 19, wherein the method further comprises: determining 503b the calibrated portion *i_{d,ref,C}* of the initial reactive power compensation current *i_{d,ref}* by calculating 519 the minimum value between the initial reactive power compensation current and the first and the second threshold values.
EEE 21. The method 500 according to any one of EEEs 16 - 20, wherein the method further comprises: regulating 521, by the first control signal received from the control unit 15, an amount of the reactive power compensation signal *i_{d,ref,S}* to be generated by the power converter device 10 based on data indicative of a real-time active power delivery status of the power converter device 10 such that an operating temperature of the power converter device 10 is maintained within a predetermined temperature range.
EEE 22. The method according to any one of EEEs 16 - 21, wherein the method further comprises: estimating 523 a voltage harmonic component *Vₕₐᵣₘ* of the real-time AC input voltage *V_{LCL}* of the power converter device 10 having a first and/or a second harmonic frequency, the voltage harmonic component being produced by the one or more electricity consumer devices 3 external to the power consumer device 4; determining 525 an initial harmonic compensation current *iₕₐᵣₘ* having a frequency corresponding to the first and/or the second harmonic frequencies of the estimated voltage harmonic component; receiving 527 a second control signal from the control unit 15 at the power converter 10; and upon receiving the second control signal: generating 529 a harmonic compensation signal *i*_{*harm*,*s*} based on the determined initial harmonic compensation current *iₕₐᵣₘ*; and providing 531 the generated harmonic compensation signal to the electricity distribution network 2 in order to compensate for the estimated voltage harmonic component *Vₕₐᵣₘ.*
EEE 23. The method according to EEE 22, wherein the method further comprises: continuously estimating 523a the voltage harmonic component *Vₕₐᵣₘ* based on obtained data associated with the real-time AC input voltage *V_{LCL};* continuously adjusting 523b a phase and an amplitude 513 component of the determined initial harmonic compensation current *iₕₐᵣₘ* until an optimum phase shift and an amplitude factor for the generated harmonic compensation signal are identified; and minimizing 531 the estimated voltage harmonic component for each of the respective first and/or second harmonic frequencies by applying 531a the optimum phase shift and amplitude factors to induce a corresponding counter-harmonic voltage *Vₕₐᵣₘ₋ₐₙₜᵢ* at a total network impedance of the electricity distribution network 2.
EEE 24. The method 500 according to any one of EEEs 16 - 23, wherein the method further comprises: obtaining 533, for the power converter device 10, a predicted value indicative of an internally generated voltage harmonic component *Vₕₐᵣₘ₋ᵢₙₜₑᵣₙₐₗ,* having a certain amount and a certain harmonic frequency, which will be produced as a result of performing a certain task by the power consumer device 4 connected to the power converter device 10; generating 535 a respective harmonic compensation signal for the power converter device 10 based on its predicted voltage harmonic component; and providing 537 the generated respective harmonic compensation signal to the electricity distribution network 2.
EEE 25. A computer-implemented method 600 for controlling reactive power consumption in an electricity distribution network 2, wherein the method is implemented by a distributed control system comprising a plurality of power converter devices 10a - 10n according to any one of claims 1 - 9, wherein each power converter device 10 is configured to be connected, and provide electric power to a respective power consumer device 4; wherein the method comprises: obtaining 601, at each power converter device 10, a first control command signal; and when selected upon receiving the first control command signal: generating 603 a respective portion of the reactive power compensation signal indicated by the first control command signal; and providing 605 the generated respective portion to the electricity distribution network 2 in order to at least partly compensate for and control the total reactive power consumption in the electricity distribution network 2.
EEE 26. The method 600 according to EEE 25, wherein the method further comprises: determining 607 an amount of the respective portion of the reactive power compensation signal to be generated by each selected power converter device 10 based on obtained data indicative of an average active power consumption of the power consumer device 4 connected to that power converter device 10 measured over a predefined period of time; assigning 609, as indicated by the first control command signal, the amount of the respective portion of the reactive power compensation signal to each power converter device 10.
EEE 27. The method 600 according to EEE 25, wherein the method further comprises: determining 611 an amount of the respective portion of the reactive power compensation signal to be generated by each selected power converter device 10 based on obtained data indicative of a real-time active power delivery status of that power converter device 10, such that an operating temperature of each selected power converter device 10 is maintained within a predetermined temperature range; and assigning 613, as indicated by the first control command signal, the amount of the respective portion of the reactive power compensation signal to each power converter device 10.
EEE 28. The method 600 according to any one of EEEs 25 - 27, wherein the method further comprises: obtaining 615, at each power converter device 10, a second control command signal; and when selected upon receiving the second control command signal:
   generating 617 a respective portion of the harmonic compensation signal indicated by the second control command signal; and providing 619 the generated respective portion to the electricity distribution network 2 in order to at least partly compensate for the estimated voltage harmonic component *Vₕₐᵣₘ.*
EEE 29. The method 600 according to EEE 28, wherein the method further comprises: identifying 621 a specific voltage harmonic sub-component produced by an external load in the electricity distribution network 2; assigning 623 an amount and a corresponding first and/or second harmonic frequency to the respective portion of the harmonic compensation signal of each selected power converter device 10 to counteract the identified voltage harmonic sub-component based on sensor data indicative of a physical proximity of that selected power converter device 10 to that external load.
EEE 30. The method 600 according to any one of EEEs 25 - 29, wherein the method further comprises: obtaining 625, for each power converter device 10, a predicted value indicative of an internally generated voltage harmonic component *Vₕₐᵣₘ₋ᵢₙₜₑᵣₙₐₗ,* having a certain amount and a certain harmonic frequency, which will be produced as a result of performing a certain task by the power consumer device 4 connected to that power converter device 10; generating 627 a respective harmonic compensation signal for each power converter device 10 based on its predicted voltage harmonic component; and providing 629 the generated respective harmonic compensation signal to the electricity distribution network 2.

## Claims

1. A power converter device (10) configured to be connected, and provide electric power to a power consumer device (4) comprised in an electricity distribution network (2);
wherein the power converter device (10) comprises or is in communication with a control unit (15) configured to:
estimate, based on data representative of one or more real-time characteristics of the electricity distribution network (2), a reactive current indicator parameter associated with a total reactive power consumption by one or more electricity consumer devices (3) external to the power consumer device (4) and connected to the electricity distribution network (2); and
calculate a corresponding reactive power compensation current (*i_{d,ref}*) based on the determined reactive current indicator parameter to counteract the reactive power consumption in the electricity distribution network (2);
wherein the power converter device (10) is configured to receive a first control signal from the control unit (15) causing the power converter (10) to:
generate a corresponding reactive power compensation signal based on the calculated reactive power compensation current (*i_{d,ref}*) without compromising delivery of electric power to the power consumer device (4).

2. The power converter device (10) according to claim 1, wherein data associated with one or more real-time characteristics of the electricity distribution network (2) comprises sensor measurement data and/or simulation data; and wherein the control unit (15) is further configured to:
obtain data indicative of the one or more real-time characteristics of the electricity distribution network (2) comprising:
a real-time AC current (*i_{grid}*) flowing in the electricity distribution network (2); and
a real-time AC input voltage (*V_{LCL}*) of the power converter device (10);
estimate the reactive current indicator parameter by calculating a voltage-to-current phase shift (*φ*) derived based on the obtained data;
determine an initial reactive power compensation current (*i_{d,ref}*) based on a deviation between the determined reactive current indicator parameter and a predetermined setpoint for reactive current of the electricity distribution network (2); and
determine a calibrated portion (*i_{d,ref,C}*) of the initial reactive power compensation current (*i_{d,ref}*) adjusted based at least on a respective amount of active power consumption of the power consuming device (4);
wherein the power converter device (10) is further configured to:
generate the reactive power compensation signal based on the calibrated portion; and
provide the generated reactive power compensation signal to the electricity distribution network (2).

3. The power converter device (10) according to claim 2, wherein the control unit (15) is further configured to:
obtain a predetermined DC output voltage setpoint and sensor measurement and/or simulation data indicative of a real-time DC output voltage of the power converter device (10) to be provided to the power consumer device (4);
determine a reference current (*I_{ref}*) in phase with the AC input voltage (*V_{LCL}*) of the power converter device (10) based on an estimated phase angle of the real-time AC input voltage (*V_{LCL}*) of the power converter device (10), and a calculated deviation between the predetermined DC output voltage setpoint and the real-time DC output voltage of the power converter device (10);
wherein the determined reference current (*I_{ref}*) is indicative of the active electric power consumption by the power consumer device (4); and
wherein the power converter device (10) is further configured to provide the determined reference current (*I_{ref}*) to the electricity distribution network (2) in order to minimize the deviation between the DC output voltage of the power converter device (10) and the predetermined DC output voltage setpoint.

4. The power converter device (10) according to claim 3, wherein the control unit (15) is further configured to:
determine a first threshold value for the initial reactive power compensation current (*i_{d,ref}*), the first threshold value set to be lower than a predefined peak current capacity of the power converter device (10); and
determine a second threshold value for the initial reactive power compensation current corresponding to a difference between the predefined peak current capacity of the power converter device (10) and the determined reference current (*I_{ref}*) in phase with the AC input voltage (*V_{LCL}*).

5. The power converter device (10) according to any of preceding claims, wherein the first control signal received from the control unit is adapted to regulate an amount of the reactive power compensation signal to be generated by the power converter device (10) based on data indicative of a real-time active power delivery status of the power converter device (10) such that an operating temperature of the power converter device (10) is maintained within a predetermined temperature range.

6. The power converter device (10) according to any one of claims 2 - 5, wherein the control unit is further configured to:
estimate a voltage harmonic component (*Vₕₐᵣₘ*) of the real-time AC input voltage (*V_{LCL}*) of the power converter device (10) having a first and/or a second harmonic frequency, the voltage harmonic component, being produced by the one or more electricity consumer devices (3) external to the power consumer device (4);
determine an initial harmonic compensation current (*iₕₐᵣₘ*) having a frequency corresponding to the first and/or the second harmonic frequencies of the estimated voltage harmonic component;
wherein the power converter device (10) is further configured to receive a second control signal from the control unit (15) causing the power converter (10) to:
generate a harmonic compensation signal based on the determined initial harmonic compensation current (*iₕₐᵣₘ*); and
provide the generated harmonic compensation signal to the electricity distribution network (2) in order to compensate for the estimated voltage harmonic component (*Vₕₐᵣₘ*).

7. The power converter device (10) according to claim 6, wherein the control unit (15) is further configured to:
continuously estimate the voltage harmonic component (*Vₕₐᵣₘ*) based on obtained data associated with the real-time AC input voltage (*V_{LCL}*); and
continuously adjust a phase and an amplitude component of the determined initial harmonic compensation current (*iₕₐᵣₘ*) until an optimum phase shift and an amplitude factor for the generated harmonic compensation signal are identified;
wherein the optimum phase shift and amplitude factors provide a corresponding counter-harmonic voltage (*V_{harm- anti}*) induced at a total network impedance of the electricity distribution network that minimizes the estimated voltage harmonic component (*Vₕₐᵣₘ*) for each of the respective first and/or second harmonic frequencies.

8. The power converter device (10) according to any one of preceding claims, wherein the control unit (15) is further configured to:
obtain a predicted value indicative of an internally generated voltage harmonic component (*Vₕₐᵣₘ₋ᵢₙₜₑᵣₙₐₗ*), having a certain amount and a certain harmonic frequency, which will be produced as a result of performing a certain task by the power consumer device (4) connected to the power converter device (10); and
generate and provide a respective harmonic compensation signal to the electricity distribution network (2) based on the predicted voltage harmonic component.

9. A distributed control system (200) comprising a plurality of power converter devices (10a - 10n) according to any one of claims 1 - 8, wherein each power converter device (10) is configured to be connected and provide electric power to a respective power consumer device (4); and
wherein each power converter device (10) is configured to obtain a first control command signal, and when selected upon receiving the first control command signal:
generate and provide a respective portion of the reactive power compensation signal, indicated by the first control command signal, to the electricity distribution network (2) in order to at least partly compensate for and control the total reactive power consumption in the electricity distribution network (2).

10. The distributed control system (200) according to claim 9, wherein the first control command signal is adapted to assign an amount of the respective portion of the reactive power compensation signal to be generated by each selected power converter device (10) based on data indicative of an average active power consumption of the power consumer device (4) connected to that power converter device (10) measured over a predefined period of time.

11. The distributed control system (200) according to claim 9, wherein the first control command signal is adapted to assign an amount of the respective portion of the reactive power compensation signal to be generated by each selected power converter device (10) based on data indicative of a real-time active power delivery status of that power converter device (10) such that an operating temperature of the power converter device (10) is maintained within a predetermined temperature range.

12. The distributed control system (200) according to any one of claims 9 - 11, wherein each power converter device (10) is configured to obtain a second control command signal, and when selected upon receiving the second control command signal:
generate and provide a respective portion of the harmonic compensation signal, indicated by the second control command signal, to the electricity distribution network (2) in order to at least partly compensate for the estimated voltage harmonic component (*Vₕₐᵣₘ*).

13. The distributed control system (200) according to claim 12, wherein the respective portion of the harmonic compensation signal of each selected power converter device (10) is assigned an amount and a corresponding first and/or second harmonic frequency to counteract an identified specific voltage harmonic sub-component based on data indicative of a physical proximity of the selected power converter device (10) to an external load (3) which is producing that identified voltage harmonic sub-component in the electricity distribution network (2).

14. A computer-implemented method (500) for controlling reactive power consumption in an electricity distribution network (2), wherein the method is at least partly implemented in a power converter device (10) configured to be connected, and provide electric power to a power consumer device (4) comprised in the electricity distribution network (2); wherein the power converter device (10) comprises or is in communication with a control unit (15);
wherein the method comprises:
determining (501) based on data representative of one or more real-time characteristics of the electricity distribution network (2), a reactive current indicator parameter associated with a total reactive power consumption by one or more electricity consumer devices (3) external to the power consumer device (4) and connected to the electricity distribution network (2);
calculating (503) a corresponding reactive power compensation current based on the determined reactive current indicator parameter to counteract the reactive power consumption in the electricity distribution network (2);
receiving (505) a first control signal from the control unit (4) at the power converter device (10); and
upon receiving the first control signal:
generating (507) a corresponding reactive power compensation signal based on the calculated reactive power compensation current without compromising delivery of electric power to the power consumer device (4).

15. The method (500) according to claim 14, wherein data associated with one or more real-time characteristics of the electricity distribution network (2) comprises sensor measurement data and/or simulation data; and wherein the method further comprises:
obtaining (501a) data indicative of the one or more real-time characteristics of the electricity distribution network (2) comprising:
a real-time AC current (*i_{grid}*) flowing in the electricity distribution network (2); and
a real-time AC input voltage (*V_{LCL}*) of the power converter device (10);
determining (501) the reactive current indicator parameter by calculating a voltage-to-current phase angle shift (*φ*) derived based on the obtained data;
determining (503a) an initial reactive power compensation current (*i_{d,ref}*) by calculating a deviation between the determined reactive current indicator parameter and a predetermined setpoint for reactive current of the electricity distribution network (2); and
determining (503b) a calibrated portion (*i_{g,ref,C}*) of the initial reactive power compensation current (*i_{g,ref}*) adjusted based at least on a respective amount of active power consumption of the power consuming device (4);
wherein the method further comprises:
generating (507) the reactive power compensation signal based on the calibrated portion (*i_{g,ref,C}*); and
providing (509) the generated reactive power compensation signal to the electricity distribution network (2).

16. The method according to claim 15, wherein the method further comprises:
estimating (523) a voltage harmonic component (*Vₕₐᵣₘ*) of the real-time AC input voltage (*V_{LCL}*) of the power converter device (10) having a first and/or a second harmonic frequency, the voltage harmonic component being produced by the one or more electricity consumer devices (3) external to the power consumer device (4);
determining (525) an initial harmonic compensation current (*iₕₐᵣₘ*) having a frequency corresponding to the first and/or the second harmonic frequencies of the estimated voltage harmonic component;
receiving (527) a second control signal from the control unit (15) at the power converter (10); and upon receiving the second control signal:
generating (529) a harmonic compensation signal (*i_{harm,S}*) based on the determined initial harmonic compensation current (*iₕₐᵣₘ*); and
providing (531) the generated harmonic compensation signal to the electricity distribution network (2) in order to compensate for the estimated voltage harmonic component (*V*_{*harm*)}*.*

17. A computer-implemented method (600) for controlling reactive power consumption in an electricity distribution network (2), wherein the method is implemented by a distributed control system (200) comprising a plurality of power converter devices (10a - 10n) according to any one of claims 1 - 9, wherein each power converter device (10) is configured to be connected, and provide electric power to a respective power consumer device (4);
wherein the method comprises:
obtaining (601), at each power converter device (10), a first control command signal; and when selected upon receiving the first control command signal:
generating (603) a respective portion of the reactive power compensation signal indicated by the first control command signal; and
providing (605) the generated respective portion to the electricity distribution network (2) in order to at least partly compensate for and control the total reactive power consumption in the electricity distribution network (2).

18. The method (600) according to claim 17, wherein the method further comprises:
obtaining (615), at each power converter device (10), a second control command signal; and when selected upon receiving the second control command signal:
generating (617) a respective portion of the harmonic compensation signal indicated by the second control command signal; and
providing (619) the generated respective portion to the electricity distribution network (2) in order to at least partly compensate for the estimated voltage harmonic component (*Vₕₐᵣₘ*).
